# EUROPEAN PATENT SPECIFICATION

(11) **EP 2 251 635 B1**
(45) Date of publication and mention of the grant of the patent: **01.10.2014**
(21) Application number: 10162743.8
(22) Date of filing: 12.05.2010
(51) Int. Cl.: G01B 5/012, G01B 5/016

(54) **Probe for three-dimensional shape measuring apparatus and three-dimensional shape measuring apparatus.**
Sonde für eine dreidimensionale Formmessvorrichtung und dreidimensionale Formmessvorrichtung
Sonde pour appareil de mesure de forme tridimensionnelle et appareil de mesure de forme tridimensionnelle

(30) Priority: 15.05.2009 JP 2009118386; 22.04.2010 JP 2010098865
(43) Date of publication of application: 17.11.2010
(73) Proprietor: Panasonic Corporation, Kadoma-shi Osaka 571-8501 (JP)
(72) Inventor: Funabashi, Takanori, Osaka 540-6207 (JP); Araki, Takahisa, Osaka 540-6207 (JP); Youkaichiya, Motoo, Osaka 540-6207 (JP)
(74) Representative: Eisenführ Speiser

(56) References cited:
- WO-A1-2007/135857
- JP-A- 2008 292 236
- US-A- 5 209 131
- US-A1- 2005 229 420
- US-A1- 2006 201 012

## Description

The present invention relates to a probe for three-dimensional shape measuring apparatus that scans and measures a three-dimensional shape with a high accuracy and with a low measurement force, and a three-dimensional shape measuring apparatus including the same.

### Background Art

In US 5,209,131 is described a multiaxis measuring probe for continuous measurement of workpieces (e.g. roundness, other form, or size measurement) has in one embodiment a stylus suspended by resilient forces acting in opposition so as to determine an equilibrium rest position. This appears to improve the dynamic response/accuracy trade-off of the probe. The resilient forces are preferably provided by a diaphragm spring and one or more opposing springs. The stylus is preferably held magnetically to a stylus mount via precision bearings, and the resilient forces act on the stylus mount. During calibration, a series of probe data is gathered from probe/sensor output signals at given positions of the probe along curved paths. A corresponding series of positional data for the given positions is gathered independently of the probe. A correlation is made between the probe data and the positional data so as to obtain calibration parameters for correction of measurement signals. These calibration parameters are stored with a measurement expression for later use with probe output signals to obtain correct measurement signals.

In US 2005/229420 A1 is described a probe head for a coordinate measuring machine has a stylus resiliently suspended in a housing. A sensor arrangement serves for detecting deflections of the stylus relative to the housing. The sensor arrangement comprises at least one Hall sensor having a magnet and a Hall element arranged in a vicinity to each other. When the stylus is deflected, the magnet is laterally passed by the Hall element in a direction defined form the North Pole to the South Pole of the magnet or vice versa. A Hall voltage of changing polarity can be tapped at the Hall element then. A preferably linear range around the polarity change is processed in order to determine the deflection of the stylus.

In US 2006/201012 A1 is described a head for the linear dimension checking of mechanical pieces including a casing, an arm carrying a feeler for touching the mechanical piece to be checked, a fulcrum for enabling displacements of the arm with respect to the casing and a transducer for providing signals depending on the position of the arm with respect to the casing. Various components of the head can be adjusted and/or replaced from the exterior of the casing. The transducer is of the inductive, half-bridge type, with multiple windings. An integral element for the electric connection to a processing unit includes the windings of the transducer, a cable and a connector. A checking apparatus, including at least a gauging or measuring head, includes a stationary structure and at least a support structure for the head, coupled to the stationary structure in an adjustable and removable way.

As a conventional probe for three-dimensional shape measuring apparatus that can measure an outer surface, an inner surface, a hole diameter and the like of a measurement object (hereinafter, referred to as a probe), there is a probe disclosed in International Publication Number WO2007/ 135857. Figs. 24 and 25 show a configuration of the probe disclosed in International Publication Number WO2007/ 135857.

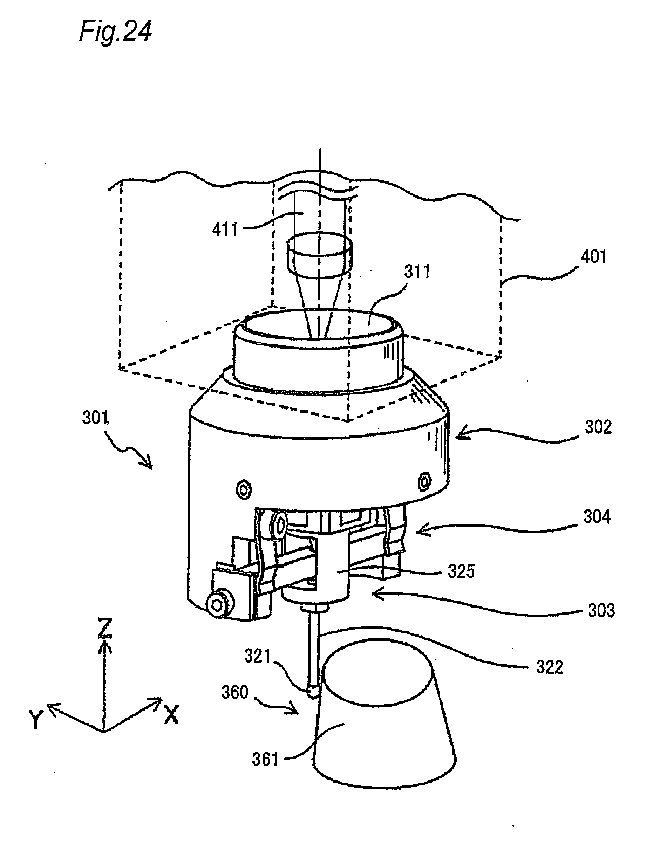

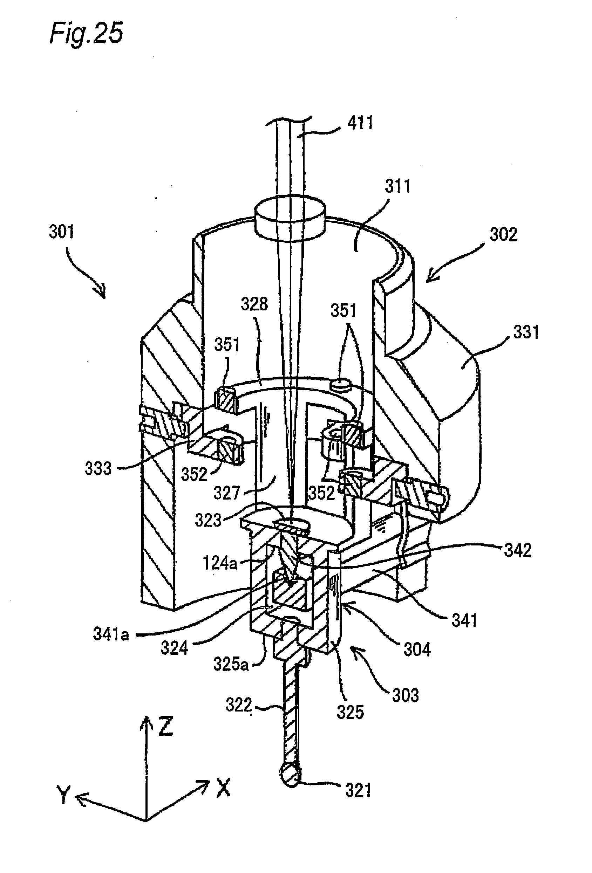

A probe 301 of Figs. 24 and 25 has a member for attachment 302 to be attached to a three-dimensional shape measuring apparatus (hereinafter, referred to as a shape measuring apparatus) 401, a swinging portion 303, and a coupling mechanism 304. The swinging portion 303 includes an arm 322 having a stylus 321 at an end thereof. Moreover, to a central portion of the swinging portion 303 is fixed a mirror 323 that receives laser light for measurement 411 emitted from the shape measuring apparatus 401. By the coupling mechanism 304, the swinging portion 303 is swingably coupled to the member for attachment 302, which is a fixed member. The coupling mechanism 304 includes a placement table 341 included by the member for attachment 302, a fulcrum member 342 on the swinging portion 303 side, a pointed end of which is fitted into a conical groove 341a formed in this placement table 341. The swinging portion 303 can swing with a contact portion of the pointed end of the fulcrum member 342 and the conical groove 341a as the center of swing. The swing of the swinging portion 303 allows the arm 322 to be freely inclined in a horizontal direction (X and Y directions in the drawing).

Four movable-side magnets 351 are attached to an upper portion of the swinging portion 303 on the same radius at regular intervals. Moreover, four fixed-side magnets 352 are attached to the member for attachment 302 so as to be located vertically below the movable-side magnets 351 to make pairs with the movable-side magnets 351, respectively. The movable-side magnets 351 and the fixed-side magnets 352 are fixed in a direction where an attraction force acts on each other in each of the pairs. When the swinging portion 303 is inclined in the horizontal direction, a distance between the movable-side magnets 351 and the fixed-side magnets 352 becomes larger, and nature of the magnets causes a restoring force to act in a direction where the pairs of magnets become closer to one another. As a result, the restoring force acts on the entire swinging portion 303 in the direction where the inclination is returned. Similarly, when the swinging portion 303 rotates around a vertical axis with the pointed end of the fulcrum member 342 as a center, the magnetic force between the movable-side magnets 351 and the fixed-side magnets 352 causes a restoring force to act on the swinging portion 303 in a direction where the rotation is returned. The above-described magnetic restoring force allows the swinging portion 303 during non-measurement time to be held in a position in which an extending direction of the arm 322 coincides with the vertical direction.

Shape measurement of a surface to be measured 361 of a measurement object 360 is performed by pressing a terminal end of the stylus 321 to the surface to be measured 361 with a minute pressing force (measurement force). This measurement force is generated as follows. The swinging portion 303 is inclined by slightly moving the member for attachment 302 towards the measurement object 360 side with the stylus 321 in contact with the surface to be measured 361. When the swinging portion 303 is inclined, the attraction force of the movable-side magnets 351 and the fixed-side magnets 352 generates a restoring force that restores the swinging portion 303 to a neutral position of an initial state where the arm 322 extends in the vertical direction. This magnetic restoring force generates the measurement force that presses the stylus 321 to the surface to be measured 361.

Generally, the shape measuring apparatus brings the stylus into contact with the surface to be measured 361 of the measurement object 360, and relatively moves the probe 301 along the surface to be measured 361 of the measurement object 360 while controlling so as to make the measurement force approximately constant to thereby measure and calculated a surface shape of the surface to be measured 361. In the case of the shape measuring apparatus 401 including the probe 301 shown in Figs. 24 and 25, the laser light for measurement 411 is directed to the mirror 323 fixed to the swinging portion 303 while moving the probe 30 along the surface to be measured 361, and a slight inclination of the mirror 323 is measured from reflected light 411a, that is, position change of the stylus 321 is measured.

By the probe 301 shown in Figs. 24 and 25, a surface extending in the vertical direction or in the approximately vertical direction (vertical surface) of the measurement object 360 can be measured with a high accuracy. However, the swinging portion 303 including the stylus 321 that this probe 301 has can swing in the horizontal direction, but cannot move in the vertical direction. As described before, in this probe 301, inclining the swinging portion 303 generates the measurement force. Accordingly, the stylus 321 cannot be brought into contact with a surface extending in a horizontal direction or in a approximately horizontal direction (horizontal surface) of the measurement object 360, such as a top end surface of the measurement object 360 shown in Fig. 24, with the measurement force acting. Thus, in the probe 301 shown in Figs. 24 and 25, the shape measurement of the horizontal surface of the measurement object 360 is disabled.

As a probe that can measure both the horizontal surface and the vertical surface, there is a probe disclosed in Japanese Patent Application Laid-Open No. 2008-292236. Fig. 26 shows a configuration of the probe disclosed in Japanese Patent Application Laid-Open No. 2008-292236.

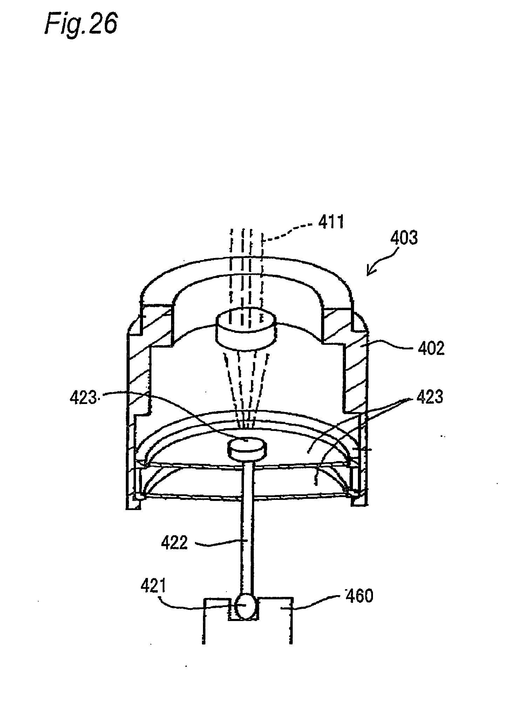

The probe 403 shown in Fig. 26 has an attachment portion 402 to be attached to a shape measuring apparatus, two thin plates 423 whose outer circumferences are fixed to this attachment portion 402, an arm 422 that is fixed to a center of the two thin plates 423 at an upper side thereof and includes a stylus 421 at a lower end thereof, and a mirror 423 fixed to an upper end surface of the arm 422. The arm 422 is enabled to both swing in the horizontal direction and move in the vertical direction by the thin plates 423 elastically bending. Accordingly, in this probe 403, the stylus 421 can be brought into contact with both the vertical surface and the horizontal surface with the measurement force acting. A swinging angle and a movement amount of the mirror 423 are measured from the reflected light of the laser light for measurement 411 irradiated from the shape measuring apparatus, which enables the shape measurement of both the horizontal surface and the vertical surface.

For high-accuracy shape measurement, it is necessary to make smaller the measurement force with which the stylus is pressed to the surface to be measured. In the case of the probe 403 shown in Fig. 26, in order to make the measurement force smaller, it is necessary to make small a thickness of the thin plates 423, thereby making small rigidity of the thin plates 423 against the swinging and the movement in the vertical direction of the arm 422. However, if the thickness of the thin plates 423 is made small to obtain the low rigidity, the thin plates 423 are deformed in the horizontal direction by a horizontal component of a reaction force of the measurement force acting on the stylus 421 during the measurement of the vertical surface. With the deformation of these thin plates 423 in the horizontal direction, the mirror 423 fixed to the upper end surface of the arm 422 is also displaced in the horizontal direction to cause a measurement error. As the thin plates 423 are made thinner in order to make the measurement force smaller, the displacement of the mirror 423 in the horizontal direction during the measurement of the vertical surface, which is attributed to rigidity insufficiency of the thin plates 423, becomes larger. In this manner, in the probe 403 of Fig. 26, making small the pressing force for high-accuracy shape measurement and preventing the measurement error during the measurement of the vertical surface cannot be balanced.

### Summary of Invention

The objective according to the invention is achieved by an apparatus comprising the features of claim 1.

An object of the present invention is to enable measurement with a small measurement force for both of a vertical surface and a horizontal surface, and reduce deformation of a probe itself by a horizontal component of a reaction force of the measurement force during the measurement of the vertical surface so as to realize shape measurement of a measurement object with a high accuracy, in the probe for three-dimensional shape measuring apparatus, and a three-dimensional shape measuring apparatus.

A probe for three-dimensional shape measuring apparatus of the present invention includes: an arm support portion from which an arm with a stylus for contacting with a surface to be measured of a measurement object at a lower end thereof extends downwardly and to which a mirror is attached; an elastic portion to which the arm support portion is attached, which minutely moves the arm support portion in a vertical direction by elastic deformation, and which has a larger rigidity in a horizontal direction than that in a vertical direction; a swinging portion which holds the elastic portion; an attachment portion for attachment to a three-dimensional shape measuring apparatus; a coupling mechanism which includes a fulcrum portion provided in the swinging portion and a cradle portion provided in the attachment portion and receiving the fulcrum portion thereon, and which couples the swinging portion to the attachment portion swingably with the fulcrum portion as a fulcrum point; and a biasing mechanism which includes a movable-side member provided in the swinging portion and a fixed-side member provided in the attachment portion so as to be opposed to the movable-side member at a distance in the vertical direction, the movable-side and fixed-side members generating a magnetic attraction force which biases the swinging portion so as to direct the arm in the vertical direction.

The arm support portion to which the arm with the stylus is attached is held by the swinging portion with the elastic portion interposed. The swinging portion is coupled to the attachment portion by the coupling mechanism. The swinging portion can swing by the coupling mechanism, and is magnetically biased by the biasing mechanism so that the arm is directed in the vertical direction. During the measurement of a surface extending in the vertical direction or in a approximately vertical direction (vertical surface) of the measurement object, the swing of the swinging portion causes the arm to be inclined together with the arm support portion, and the magnetic attraction force generated by the biasing mechanism acts on the swinging portion, by which a measurement force acts on the surface to be measured from the stylus. On the other hand, during the measurement of a surface extending in the horizontal direction or in a approximately horizontal direction (horizontal surface) of the measurement object, the elastic deformation of the elastic portion moves the arm vertically upward together with the arm support portion, and an elastic biasing force generated by the elastic portion acts on the arm support portion, by which a measurement force acts on the surface to be measured from the stylus. Accordingly, in the probe for three-dimensional shape measuring apparatus of the present invention, the shape measurement of both the vertical surface and the horizontal surface is enabled.

The measurement force during the measurement of the vertical surface is generated by biasing, by the magnetic attraction force of the basing mechanism, the swinging portion swingably coupled to the attachment portion by the coupling portion. Accordingly, the shape measurement of the vertical surface is enabled with a small measurement force.

The measurement force during the measurement of the horizontal surface is generated by biasing the arm support portion by the elastic force generated by the elastic deformation of the elastic portion. The rigidity in the vertical direction of the elastic portion only needs to be enough to support the weight of the arm with the stylus arranged at the lower end and the arm support portion. That is, the weight that the elastic portion needs to support is small. Thus, the rigidity in the vertical direction of the elastic portion is made small, which can make small the biasing force generated by the elastic deformation of the elastic portion. Accordingly, the shape measurement of the horizontal surface is enabled with a small measurement force.

As described above, in the probe for three-dimensional shape measuring apparatus of the present invention, high-accuracy measurement with a small measurement force is enabled for both the vertical surface and the horizontal surface.

The elastic portion has the larger rigidity in the horizontal direction than the rigidity in the vertical direction. Setting the rigidity in the horizontal direction to be sufficiently large reduces the deformation in the horizontal direction of the elastic portion by the horizontal component of the reaction force of the measurement force acing on the stylus during the measurement of the vertical surface, so that the shape of the vertical surface of the measurement object can be measured with a high accuracy.

For example, the elastic portion is made of a single plate spring.

By making the elastic portion of the plate spring, the rigidity in the horizontal direction can be set to be larger as compared with the rigidity in the vertical direction.

Preferably, the elastic portion includes two or more plate springs arranged at a distance from one another in the vertical direction.

By making the elastic portion of the two or more plate springs, the rigidity in the horizontal direction can be set to be larger as compared with the rigidity in the vertical direction.

Especially, it is preferable that the stylus, the fulcrum portion, and the mirror are arranged on a same axis, that the mirror is positioned above the stylus and the fulcrum portion, and that the elastic portion consists two spring plates, one of the spring plates being positioned above a position where the fulcrum portion is received on the cradle portion and the other of the spring plates being positioned below the position.

When a minute deformation in the horizontal direction of the two plate springs, which constitute the elastic portion, is occurred due to the horizontal component of the reaction force of the measurement force applied to the stylus during the measurement of the vertical surface, a center of rotation of the stylus due to the deformation of the two plate springs is changed corresponding to a length of the arm. However, by the arrangement of the two plate springs where the fulcrum member is sandwiched in the vertical direction between them, the center of rotation is position ed near the pointed end of the fulcrum portion. This results in that decrease of measurement error due to deflection of the two plate springs by a horizontal element of a resistance force of a measurement force. Especially, it is preferable that the two plate springs are approximately evenly arranged in vertical direction with respect to the pointed end of the fulcrum portion.

The plate spring includes a central portion to which the arm support portion is attached, and a plurality of beam-like portions that extend radially from this central portion so that terminal ends thereof are fixed to the swing portion.

This configuration allows the rigidity of the elastic portion in a plurality of directions of the horizontal direction. Particularly, providing the plurality of beam-like portions equiangularly allows the rigidity of the elastic portion to be set to be larger in all the directions of the horizontal direction. For example, the four beam-like portions are provided radially from the central portion into a cross shape in plane view.

Alternatively, the plate spring includes a central portion to which the arm support portion is attached, a peripheral portion which is fixed to the swinging portion, and a plurality of connecting portions having non-linear configuration and respectively connecting the central portion and the peripheral portion.

This configuration allows to set a length of a path from the central portion to which the arm support portion is attached to the swinging portion long, resulting in that the rigidity in the vertical direction can be set smaller.

The probe may further includes a viscoelastic body attached to the plate spring and having a configuration corresponding to vibration property of the plate spring.

Vibration due to low rigidity of the elastic portion can be occurred depending on such effects as the characteristic of the surface of the object to be measured or vibration occurred in the measurement apparatus. The viscoelastic body attached to the plate spring can suppress the vibration causing the measurement error.

The movable-side member and the fixed-side member are both made of permanent magnets, and are arranged so that different poles thereof are opposed to each other.

Alternatively, one of the movable-side member and the fixed-side member is made of a permanent magnet and the other is made of a magnetic body.

The cradle portion of the coupling mechanism includes a conical groove in an upper portion, the fulcrum portion of the coupling mechanism is made of a needle-like projection that projects vertically downward, and the swinging portion is coupled to the attachment portion swingably with a contact portion of a deepest portion of the conical groove and a pointed end of the fulcrum portion as a center of swing.

The arm support portion is provided with a through-hole extending in a lateral direction at a center, and the cradle portion of the coupling mechanism extends through the through-hole.

The swinging portion includes an extending portion that extends on the opposite side of the stylus with respect to the fulcrum portion, and a movable-side holding portion that is provided on the terminal end side of the extending portion and holds the movable-side member, and the attachment portion includes a cylindrical body, and a fixed-side holding portion that is provided on the fulcrum portion side with respect to the movable-side holding portion inside the body, and holds the fixed-side member.

Specifically, the movable-side holding portion is constructed into a ring shape, and holds the movable-side member in a plurality at intervals on a lower surface side, and the fixed-side holding member holds the fixed-side member in a plurality, which are respectively arranged at positions opposed to the respective movable-side members in the vertical direction.

A three-dimensional shape measuring apparatus of the present invention includes: the above-described probe for three-dimensional shape measuring apparatus having, in the arm support portion, a mirror that reflects laser light for measurement; a laser light generating unit that generates the laser light for measurement; and a measurement-point information deciding unit that finds position information of a measurement point in a surface to be measured of a measurement object, based on reflected light resulting from reflecting the laser light for measurement at the mirror.

The measurement-point information deciding unit includes: an inclination-angle detecting unit that detects an inclination angle of the swinging portion from the reflected light; a stylus-position calculation unit that converts an angle signal obtained from the inclination-angle detecting unit to a displacement amount of the stylus with respect to the attachment portion; a position-coordinate measuring unit that finds position coordinate values of the measurement point with respect to the attachment portion from the reflected light; and an addition unit that adds the displacement amount of the stylus to the position coordinate values to fined the position information of the measurement point.

The inclination-angle detecting unit has a light detector that receives the reflected light, and this light detector has one light-receiving surface zoned into a plurality of light-receiving regions that perform photoelectric conversion independently from one another.

According to the probe for three-dimensional shape measuring apparatus and the three-dimensional shape measuring apparatus of the present invention, since the measurement with small measurement force is enabled for both the vertical surface and the horizontal surface, and the deformation in the horizontal direction of the elastic portion by the horizontal component of the reaction force of the measurement force can be reduced, the shape of the measurement object can be measured with a high accuracy.

### Brief Description of Drawings

Fig. 1 is a perspective view of a probe for three-dimensional shape measuring apparatus in an embodiment of the present invention;
Fig. 2 is a bottom view of the probe for three-dimensional shape measuring apparatus in Fig. 1;
Fig. 3 is a perspective view when the probe for three-dimensional shape measuring apparatus in Fig. 1 is cut in a B-B plane;
Fig. 4 is a perspective view when the probe for three-dimensional shape measuring apparatus in Fig. 1 is cut in an A-A plane;
Fig. 5 is a plane view of the probe for three-dimensional shape measuring apparatus in Fig. 1;
Fig. 6 is a view showing a configuration of a fixed-side holding member;
Fig. 7 is a perspective view when the probe for three-dimensional shape measuring apparatus in Fig. 1 is cut in a C plane;
Fig. 8 is a perspective view when the probe for three-dimensional shape measuring apparatus is cut in the C plane in the case where rectangular plate springs are used;
Fig. 9 is a perspective view of a probe for three-dimensional shape measuring apparatus of an alternative;
Fig. 10 is a longitudinal sectional view of Fig. 9;
Fig. 11 is a perspective view when the alternative probe for three-dimensional shape measuring apparatus is cut in an A-A plane in Fig. 9;
Fig. 12 is a perspective view when the alternative probe for three-dimensional shape measuring apparatus is cut in a B-B plane in Fig. 11;
Fig. 13 is a view showing one example of a shape measuring apparatus including the probe shown in Fig. 1;
Fig. 14 is a view showing a configuration of a measurement-point information deciding unit included in the shape measuring apparatus shown in Fig. 13;
Fig. 15 is a plane view of an inclination-angle detecting unit included in the measurement-point information deciding unit shown in Fig. 13;
Fig. 16 is a view for explaining a state where reflected light from the probe is directed to the inclination-angle detecting unit;
Fig. 17 is a view for explaining an inclination angle of the probe when the measurement of a surface to be measured is performed in the probe shown in Fig. 1, in which a measurement object is shown in a plane view;
Fig. 18 is a view for explaining the inclination angle of the probe when the measurement of the surface to be measured is performed in the probe shown in Fig. 1, in which the measurement object is shown in a side elevation view;
Fig. 19 is a schematic view of bending when the number of the plate springs of the probe shown in Fig. 1 is one;
Fig. 20 is a schematic view of bending when the number of the plate springs of the probe shown in Fig. 1 is two;
Fig. 21A is a schematic view of an arrangement where both of two pate sprigs are arranged above a pointed end of a fulcrum member;
Fig. 21B is a schematic view of an arrangement where the two pate springs are arranged so that the tip end of the fulcrum member is sandwiched in the vertical direction therebetween;
Fig. 22 is a perspective view of one example of the measurement object that can be measured in the probe shown in Fig. 1;
Fig. 23 is a cross-sectional view of the measurement object shown in Fig. 22;
Fig. 24 is a perspective view of one example of a conventional probe for shape measuring apparatus;
Fig. 25 is a perspective view when the probe for shape measuring apparatus of Fig. 24 is cut in a symmetry plane; and
Fig. 26 is a perspective view of another example of the conventional probe for shape measuring apparatus.

### Description of Embodiments

Hereinafter, a probe for three-dimensional shape measuring apparatus (hereinafter, referred to as a probe) and a three-dimensional shape measuring apparatus (hereinafter, referred to as a shape measuring apparatus) in an embodiment of the present invention are described in detail with reference to the drawings.

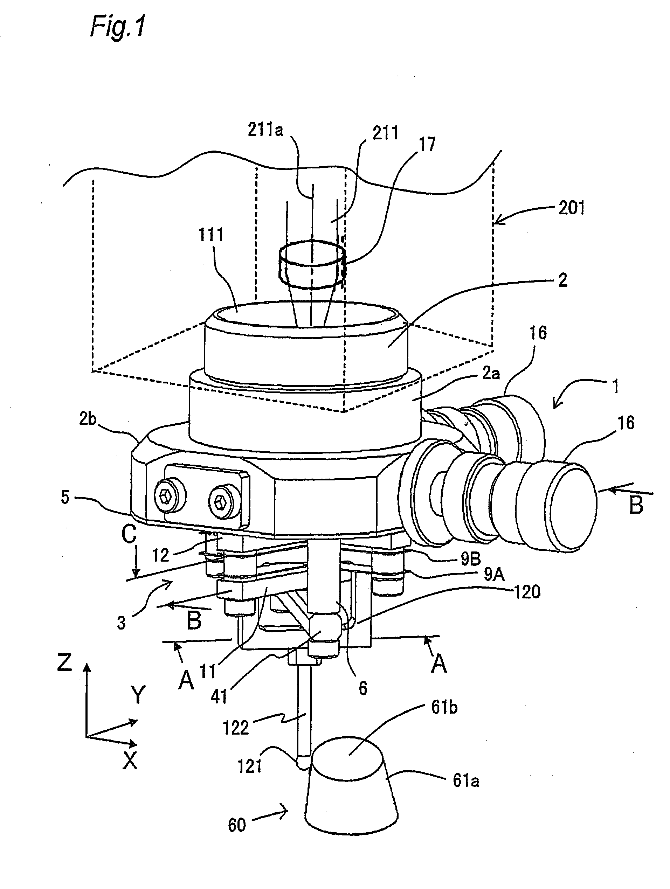

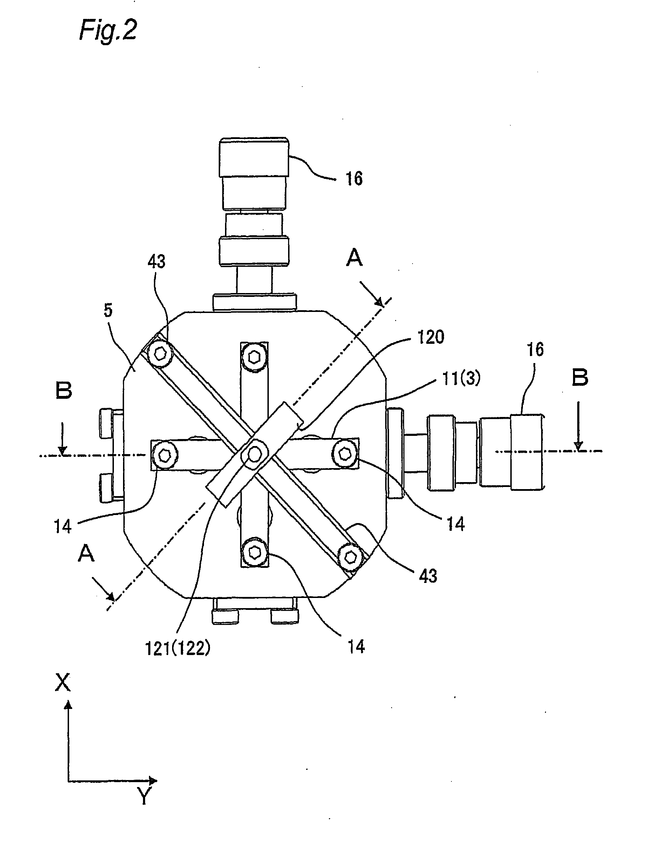

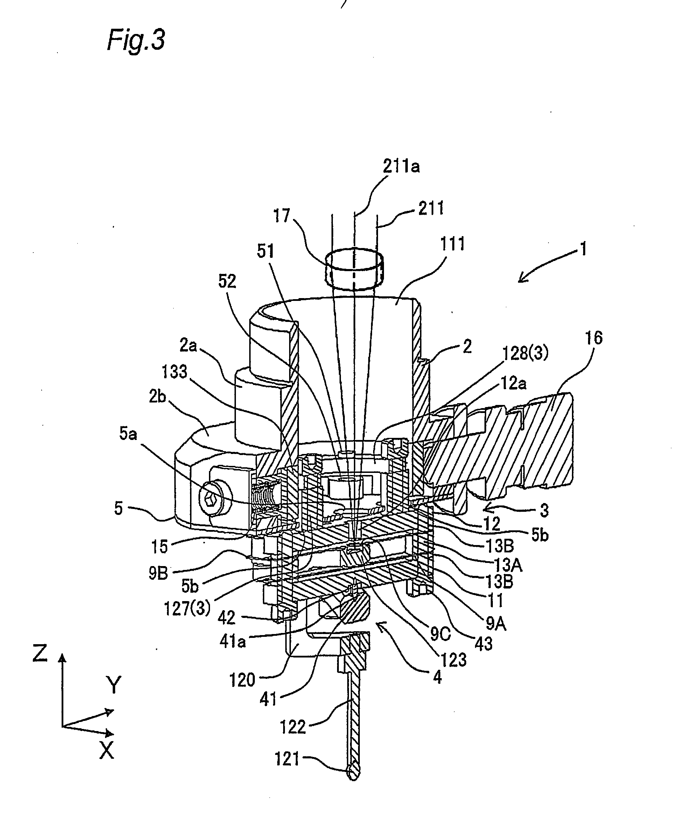

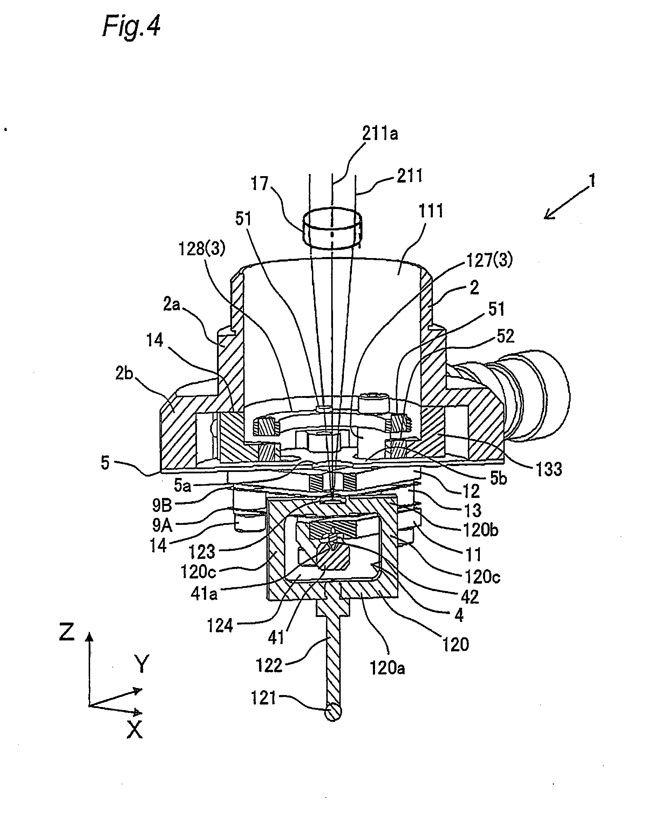

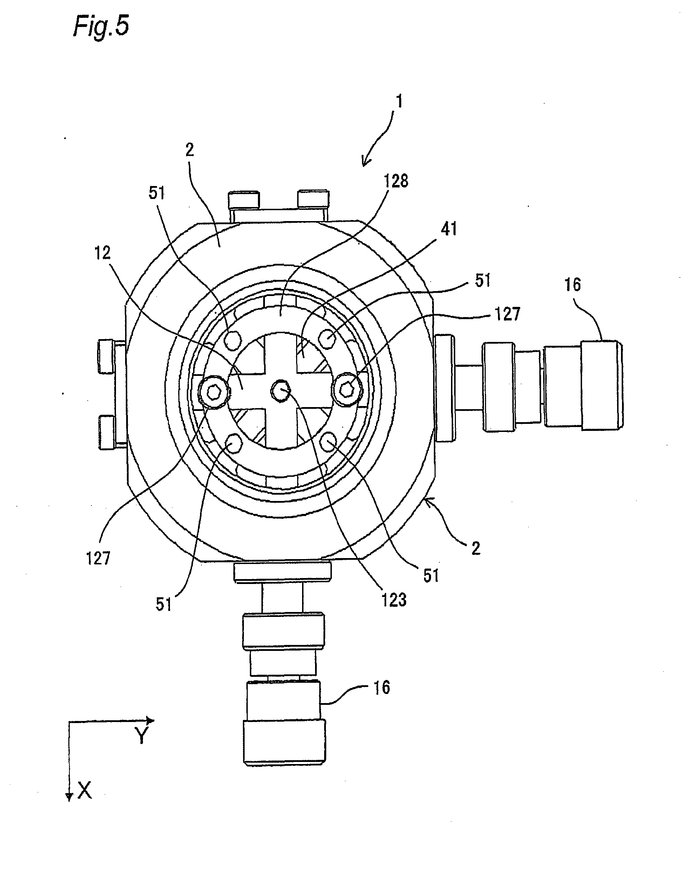

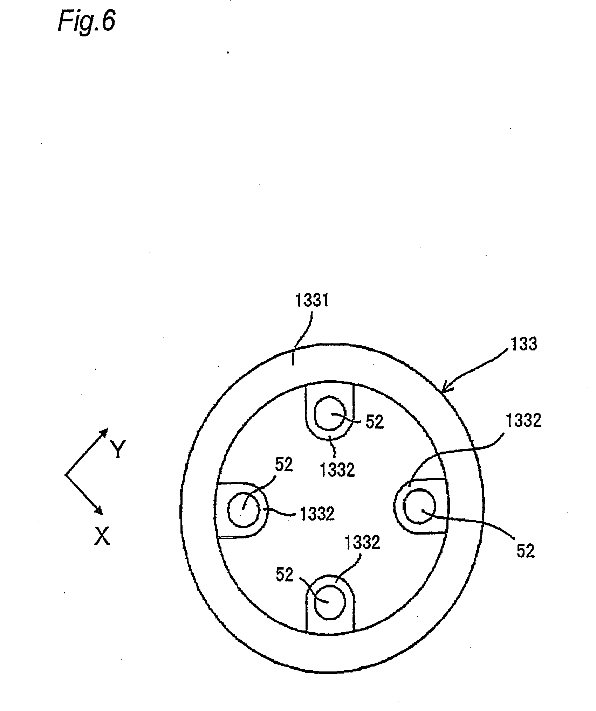

First, referring to Figs. 1 to 8, a probe 1 is described. Fig. 1 is a perspective view showing an appearance of the probe 1. Fig. 2 is a view when Fig. 1 is viewed from underneath in a vertical direction. Fig. 3 is a perspective view when the probe 1 is cut in a B-B plane of Fig. 1. Fig. 4 is a perspective view when the probe 1 is cut in an A-A plane of Fig. 1. Fig. 5 is a view when Fig. 1 is viewed from above in the vertical direction. Figs. 6 to 8 are views showing details of a part of the probe 1.

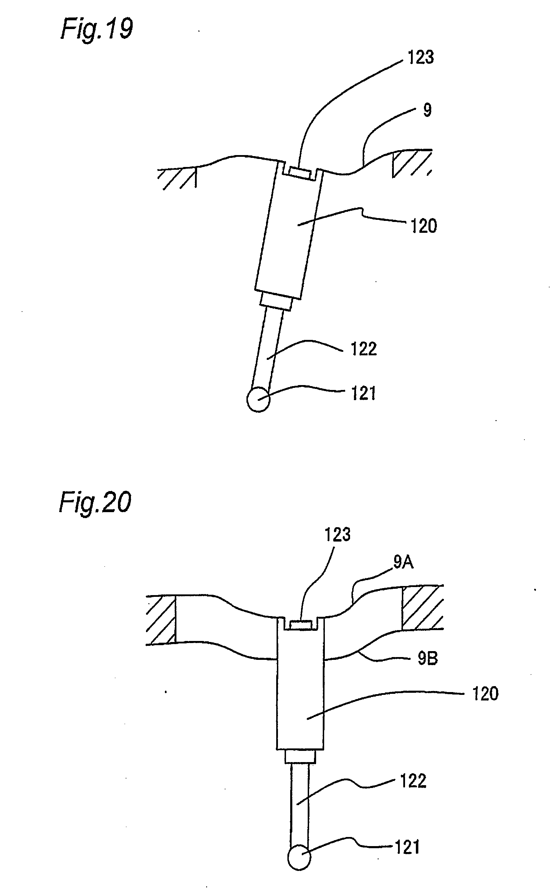

The probe 1 is included in a shape measuring apparatus 201 and has a portion to come into contact with surfaces to be measured 61a, 61b of a measurement object 60 as a measurement target. The conventional probe 301 shown in Figs. 19 and 20 has the configuration in which the arm 322 can be inclined in any direction of the horizontal direction regardless of the X, Y directions, but cannot be moved vertically upward and downward. In contrast, the prove 1 of the present embodiment has a configuration in which an arm 122 can be moved vertically upward and downward as well.

The probe 1 includes a member for attachment (attachment portion) 2, a swinging portion 3, and a coupling mechanism 4.

The member for attachment 2 is fixed to the shape measuring apparatus 201, or is a block member to be attached detachably. While the swinging portion 3 swings, the member for attachment 2 is a fixed member, and allows laser light for measurement 211 irradiated from the shape measuring apparatus 201 to go therethrough, and has, in a central portion, an opening for laser light 111 that penetrates the member for attachment 2. The member for attachment 2 includes a small-diameter portion 2a in an upper portion in the figure and a large-diameter portion 2b under the small-diameter portion 2a. The opening for laser light 111 is provided so as to penetrate the small-diameter portion 2a and the large-diameter portion 2b. A bottom end of the large-diameter portion 2b is closed by a closing plate 5. In this closing plate 5, one through-hole for laser 5a and two through-holes for swinging 5b are formed. Moreover, the member for attachment 2 includes a pair of supporting shafts 6 projected downward from the lower end side of the large-diameter portion 2b. To the lower end side of the supporting shafts 6 are fixed end portions of a placement table 41, which is a rectangular column extending in the horizontal direction.

The swinging portion 3 and the member for attachment 2 are coupled by the coupling mechanism 4. The coupling mechanism 4 is a mechanism that allows the swinging portion 3 to be supported by the member for attachment 2 so that the swinging portion 3 is inclined swingably in any direction crossing an optical axis 211a of the laser light for measurement 211 directed to a mirror 123 described later. In the present embodiment, the optical axis 211a coincides with a Z-axis direction, which is the vertical direction.

In the present embodiment, the coupling mechanism 4 is made up of the placement table 41 fixed to the member for attachment 2 via the supporting shafts 6 and closing plate 5, and a fulcrum member 42 included by the swinging portion 3. The placement table 41 is formed with a conical groove 41a in an upper surface thereof, and a pointed end of the fulcrum member 42, which is made of a needle-like projection projected vertically downward, is fitted into the groove 41a. When the pointed end is fitted, a pointed end position of the fulcrum member 42 comes into contact with a lowest point of the conical groove of the placement table 41. This configuration allows the swinging portion 3 and the member for attachment 2 to be swingably coupled with the contact portion of the fulcrum member 42 and the conical groove 41a as the center of swing. The swinging portion 3 is preferably configured to locate a gravity center thereof on a vertical axis going through an terminal end of the fulcrum member 42, so that when the fulcrum member 42 is fitted into the groove 41a of the placement table 41 for coupling, the arm 122 is directed in the vertical direction.

The swinging portion 3 holds two plate springs (elastic portion) 9A, 9B with an arm attachment portion (arm support portion) 120 attached thereto. That is, the plate springs 9A, 9B are interposed between the arm attachment portion 120 and the swinging portion 3.

The arm attachment portion 120 in the present embodiment includes a lower beam portion 120a, an upper beam portion 120b arranged at a distance above this lower beam portion 120a, and a pair of vertical beam portions 120c coupling both ends of the lower beam portion 120a and the upper beam portion 120b. The arm 122 having, at a lower end thereof, a stylus 121 to come into contact with the surfaces to be measured 61a, 61b of the measurement object 60 is attached to a lower surface of the lower beam portion 120a of the arm attachment portion 120 so as to extend downwardly. Moreover, the mirror 123 that reflects the laser light for measurement 211 going through the member for attachment 2 is attached to an upper surface of the upper beam portion 120b of the arm attachment portion 120. The stylus 121, pointed end of the fulcrum portion 42, and mirror 123 are arranged on a same axis (an axis line of the stylus 121). The laser light for measurement 211 enters the mirror 123 through the opening for laser 111 of the member for attachment 2, the through-hole for laser 5a, and through-holes 12a, 9c described later, and the reflected light traces a reverse route. As described in detail later, the arm attachment portion 120 is a member swinging and moving up and down in the vertical direction with respect to the member for attachment 2, corresponding to the displacement of the stylus 121 in accordance with a shape of the surfaces to be measured 61a, 61b.

In the center of the arm attachment portion 120 is formed a through-hole 124 in the horizontal direction surrounded by the lower beam portion 120a, the upper beam portion 120b, and the vertical beam portions 120c. The placement table 41 of the coupling mechanism 4 extends horizontally through this through-hole 124.

In the present embodiment, the stylus 121 is a spherical body having a diameter of about 0.03 to about 2 mm, for example, and the arm 122, as one example, is a rod-like member having a thickness of about 0.7 mm, and a length L of about 10 mm from the lower surface of the arm attachment portion 120 to a center of the stylus 121. These values can be appropriately changed depending on a shape of a surface to be measured 61.

The swinging portion 3 includes a lower member 11, an upper member 12, an extending portion 13 and a movable-side holding portion 128.

The lower member 11 of the swinging portion 3 penetrates the through-hole 124 of the arm attachment portion 120, and is arranged in non-contact with the arm attachment portion 120. Further, the lower member 11 is positioned above the placement table 41 also penetrating the through-hole 124 with an interval. The upper member 12 is arranged at a distance above the lower member 11, and is located at a distance above the upper beam portion 120b of the arm attachment portion 120. The lower member 11 and the upper member 12 in the present embodiment each have a cross shape in plane view. The fulcrum member 42 is attached to a lower surface of the lower member 11 in a position where the pointed end is directed vertically downward. The pointed end of the fulcrum member 42 is fitted into the conical groove 41a of the placement table 41 extending through the through-hole 124.

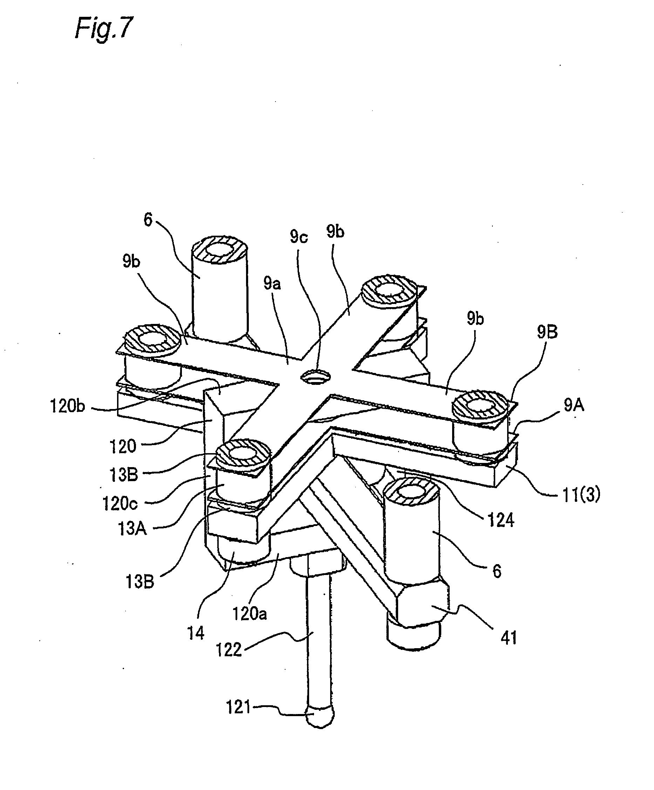

The two plate springs 9A, 9B extending in the horizontal direction are respectively held between the lower member 11 and the upper member 12 of the swinging portion 3. Referring to Fig. 7 as well, which is a perspective view cut in a C plane in Fig. 1, the plate springs 9A, 9B each include a central portion 9a, and four beam-like portions 9b extending radially from this central portion 9a at an angle interval of 90 degrees in plane view. Spacers 13A are interposed between terminal ends of the respective beam-like portions 9b of the plate springs 9A, 9B. Moreover, spacers 13B are also interposed between a lower surface of the terminal end of each of the beam-like portions 9b of the plate spring 9A on the lower side and the lower member 11 of the swinging portion 3, and between an upper surface of the terminal end of each of the beam-like portions 9b of the plate spring 9B on the upper side and the upper member 12 of the swinging portion 3, respectively. The lower member 11 is fixed to the upper member 12 with four screws 14. In the plate springs 9A, 9B, the terminal ends of the beam-like portions 9b are fastened to the lower member 11 and the upper member 12 by the screws 14 with the spacers 13A, 13B interposed. The plate springs 9A, 9B except for the terminal ends of the beam-like portions 9b are not in contact with either of the lower member 11 and the upper member 12, and the plate springs 9A, 9B are not in contact with each other. That is, the plate springs 9A, 9B except for the terminal ends of the beam-like portions 9b are held by the swinging portion 3 in a so-called floating state.

The plate spring 9A on the lower side is arranged so as to penetrate the through-hole 124 of the arm attachment portion 120, while the plate spring 9B on the upper side is located above the upper beam portion 120b of the arm attachment portion 120. The arm attachment portion 120 is fixed to the central portion 9a of these plate springs 9A, 9B. Specifically, a lower surface of the upper beam portion 120b of the arm attachment portion 120 is fixed to an upper surface of the central portion 9a of the plate spring 9A on the lower side, and an upper surface thereof is fixed to a lower surface of the central portion 9a of the plate spring 9B on the upper side. The plate springs 9A, 9B are elastically bent, by which the arm attachment portion 120 can minutely move in the vertical direction with respect to the swinging portion 3. In the upper member 12 of the swinging portion 3 and the central portion 9a of the plate spring 9B on the upper side, the through-holes 12a, 9c for causing the laser light for measurement 211 to enter the mirror 123 attached to the upper beam portion 120b of the arm attachment portion 120 are formed.

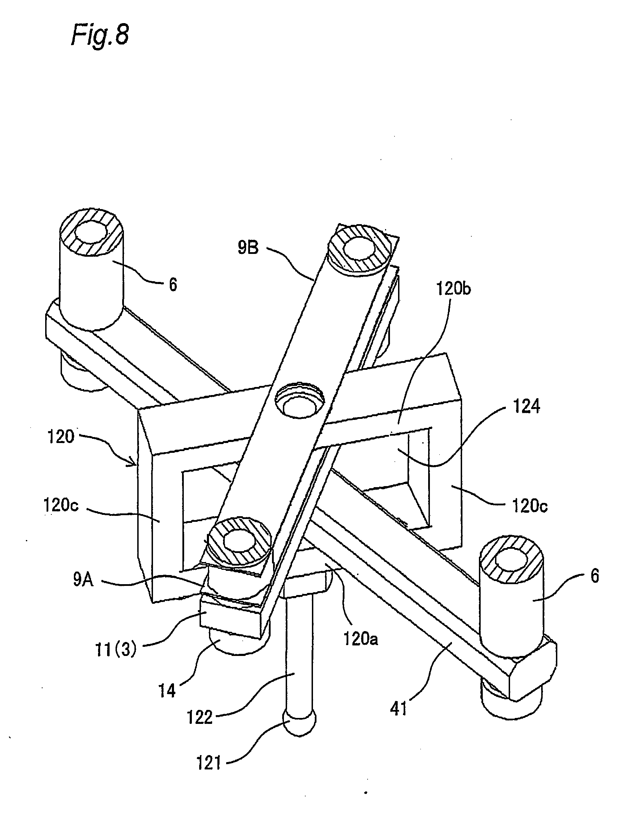

The plate springs 9A, 9B may be shaped in a rectangle extending in the horizontal direction as shown in Fig. 8. Further, a single plate spring extending in the horizontal direction may be used. Furthermore, a configuration may be employed in which a straight shape and a curved shape are combined so that a length of a path from the central portion 9a to a fixed portion located in an outer peripheral. Further, a configuration may be employed in which three or more plate springs are arranged at a distance from one another in the vertical direction. Furthermore, in place of the plate spring, a wire extending in the horizontal direction may be employed. As just described, for an elastic portion interposed between the swinging portion 3 and the arm attachment portion 120 (in the present invention, the plate springs 9A, 9B), various aspects can be employed as long as it minutely moves an arm support portion in the vertical direction by being elastically bent, and rigidity in the horizontal direction is sufficiently larger than rigidity in the vertical direction.

A pair of extending portions 127 extending vertically upward is provided in an upper surface of the upper member 12. These extending portions 127 extend through the through-holes for swinging 5b of the closing plate 5 into the member for attachment 2. A hole diameter of the though-holes for swinging 5b is set to be sufficiently larger than an outer diameter of the extending portions 127, and even when the swinging portion 3 is inclined, the extending portions 127 do not come into contact with the closing plate 5.

At upper ends of the extending portions 127 located inside the member for attachment 2, a movable-side holding portion 128, which is a ring-like member in the present embodiment, is provided. As shown in Fig. 5, in the movable-side holding portion 128, movable-side magnets 51, which are one example of a movable-side member, are provided at regular intervals at four points on the same radius. On the other hand, inside the large diameter portion 2b of the member for attachment 2, a fixed-side holding member 133 with fixed-side magnets 52 attached, which are one example of a fixed-side member, is contained. As shown in Fig. 6, the fixed-side holding member 133 includes a ring portion 1331 constructed into a ring shape, and four projected portions 1332 provided in an inner circumferential portion of the ring portion 1331. The projected portions 1332 hold the fixed-side magnets 52 and are provided at regular intervals, and concentrically. Moreover, the projected portions 1332 are located vertically below the movable-side holding portion 128.

The respective movable-side magnets 51 held by the movable-side holding portion 128 of the swinging portion 3, and the respective fixed-side magnets 52 held by the fixed-side holding member 133 of the member for attachment 2 are arranged in a position relationship in which they are opposed at a distance in a Z-axis direction, which is the vertical direction, to be paired. The movable-side magnets 51 and the fixed-side magnets 52 are fixed in a direction where an attraction force acts on each other in each of the pairs. In the present embodiment, they are fixed such that the upper side of all the magnets 51 and 52 is the north pole and the lower side thereof is the south pole. The direction of the magnets may differ between the adjacent pairs of the movable-side magnets 51 and the fixed-side magnets 52. For example, when in one pair of the movable-side magnet 51 and the fixed-side magnet 52, the upper side may be the north pole and the lower side may be the south pole, in the adjacent pair of the movable-side magnet 51 and the fixed-side magnet 52, the upper side may be the south pole, and the lower side may be the north pole.

The fixed-side holding member 133 is contained movably in the horizontal direction inside the large-diameter portion 2b of the member for attachment 2. Specifically, an upper end surface of the fixed-side holding member 133 is in slidable contact with a lower end surface of the small-diameter portion 2a, and on the other hand, a lower end portion is in slidable contact with the an upper surface of the closing plate 5. In the large-diameter portion 2b of the member for attachment 2, two pressing springs 15 biasing the fixed-side holding member 133 in the Y direction and in the X direction respectively are contained (only the pressing spring 15 in the Y direction is shown in Fig. 3). Moreover, two micrometers 16 opposed to the pressing springs 15 are attached to the large-diameter portion 2b of the member for attachment 2. An outer circumference of the fixed-side holding member 133 is elastically pressed to terminal ends of spindles of these micrometers 16 by the pressing springs 15. By advancing and retracting the spindles of the micrometers 16, fine adjustment of a position of the fixed-side holding member 133 in the horizontal direction (X and Y directions) inside the large-diameter portion 2b of the member for attachment 2 is enabled.

The probe 1 of the present embodiment configured as described above operates as follows.

By the attraction force of the movable-side magnets 51 included in the swinging portion 3 and the fixed-side magnets 52 included in the member for attachment 2, the swing portion 3 is magnetically biased vertically downward. Thus, the pointed end of the fulcrum member 42 directed vertically downward, which is included in the swinging portion 3, maintains a state where it is in contact with the center of the conical groove 41a of the placement table 41 to thereby prevent position deviation of the swinging portion 3 with respect to the member for attachment 2 and the like.

When the swinging portion 3 is inclined in the horizontal direction with the pointed end of the fulcrum member 42 as the center, a distance between the movable-side magnets 51 and the fixed-side magnets 52 becomes large, so that the nature of the magnets causes a restoring force to act in a direction where the pairs of magnets 51, 52 are moved closer to one another. As a result, a magnetic restoring force in a direction where the inclination is returned (direction toward a neutral position where the arm 122 extends in the vertical direction) acts on the entire swinging portion 3. Similarly, when the swinging portion 3 rotates around a vertical axis with the pointed end of the fulcrum member 42 as the center, by the magnetic force between the movable-side magnets 51. and the fixed-side magnets 52, a magnetic restoring force in a direction where the rotation is returned acts on the swinging portion 3. The above-described magnetic restoring forces allow the swinging portion 3 during non-measurement time to be held in a position where an extending direction of the arm 122 coincides with the vertical direction.

The arm attachment portion 120 attached to the swinging portion 3 with the plate springs 9A, 9B extending in the horizontal direction being interposed can be minutely moved in the vertical direction by the elastic deformation of the plate springs 9A, 9B. During non-measurement time, the weights of the arm-attachment portion 120, the arm 122, and the stylus 121 put the plate springs 9A, 9B into a state where they are bent in the gravity direction, and from the plate springs 9A, 9B in this bent state, the arm 122 extends vertically downward with the arm attachment portion 120 interposed.

When a shape of a surface of the measurement object extending in the vertical direction or in a approximately vertical direction (a vertical surface: in the case of measurement object 60 in Fig. 1, the surface to be measured 61a) is measured, a measurement force with which the stylus 121 is pressed to the surface to be measured is obtained as follows. When the member for attachment 2 is slightly moved to the measurement object 60 side in the horizontal direction in a state where the stylus 121 is in contact with the surface to be measured 61a, the swinging portion 3 is inclined with the pointed end of the fulcrum member 42 as the center, by which the arm 122 is inclined in the horizontal direction. Once the swinging portion 3 is inclined, by the magnetic attraction force between the movable-side magnets 51 provided in the swinging portion 3 and the fixed-side magnets 52 provided in the member for attachment 2, the restoring force is generated, which restores the swinging portion 3 to the neutral position of the initial state where the arm 122 extends in the vertical direction. By this magnetic restoring force, the stylus 121 is pressed to the surface to be measured 61 with a predetermined measurement force.

In this manner, the measurement force during the measurement of the vertical surface is generated by the operation in which the swinging portion 3 swingably coupled to the member for attachment 2 by the coupling mechanism 4 is biased by the magnetic attraction force of the movable-side and fixed-side magnets 51, 52. Accordingly, in the probe 1 of the present embodiment, the shape measurement of the vertical surface is enabled with a small measurement force. Moreover, the measurement force during the measurement of the vertical surface can be adjusted by the magnetic force and an interval between the movable-side magnets 51 and the fixed-side magnets 52. For example, the magnetic force between the movable-side magnets 51 and the fixed-side magnets 52 is set to be 0.3 mN. In the present embodiment, the magnetic force and the distance between the movable-side magnets 51 and the fixed-side magnets 52 are set so that displacement of the terminal end of the stylus 121 becomes 10 µm when the terminal end is pressed at 0.3 mN.

When a shape of a surface of the measurement object extending in the horizontal direction or in a approximately horizontal direction (a horizontal surface: in the case of the measurement object 60 in Fig. 1, the surface to be measured 61b) is measured, the measurement force with which the stylus 121 is pressed to the surface to be measured is obtained as follows. As described before, during non-measurement time, the plate springs 9A, 9B with the arm attachment portion 120 attached are bent vertically downward by the weight of the arm attachment portion 120. When the member for attachment 2 is slightly moved to the measurement object 60 side in the vertical direction in a state where the stylus 121 is in contact with the surface to be measured 61a, a bending amount of the plate springs 9A, 9B becomes small. With a measurement force obtained by multiplying a change in this bending amount of the plate springs 9A, 9B by a spring constant in the vertical direction of the plate springs 9A, 9B, the stylus 121 is pressed to the surface to be measured 61b.

In this manner, the measurement force during the measurement of the horizontal surface is generated by the operation in which the elastic force generated by the bending of the plate springs 9A, 9B biases the arm attachment portion 120. A rigidity in the vertical direction of the plate springs 9A, 9B only needs to be large enough to support the weights of the arm attachment portion 120, the arm 122, and the stylus 121, which the plate springs 9A, 9B support. That is, the weight that the plate springs 9A, 9B need to support is small. This can make small the rigidity in the vertical direction of the plate springs 9A, 9B, thereby making small the biasing force generated by the elastic deformation of the plate springs 9A, 9B. Accordingly, the probe 1 of the present embodiment can measure the shape of the horizontal surface with a small measurement force.

As described above, the probe 1 of the present embodiment, the high-accuracy measurement with small measurement forces is enabled for both the vertical surface and the horizontal surface.

The plate springs 9A, 9B extending in the horizontal direction each have the sufficiently larger rigidity in the horizontal direction than the rigidity in the vertical direction. Accordingly, the deformation in the horizontal direction of the plate springs 9A, 9B by a horizontal component of a reaction force of the measurement force acting on the stylus 121 during the measurement of the vertical surface, and the displacement of the mirror 123 in the horizontal direction accompanying the foregoing can be substantially eliminated. In this manner, by substantially eliminating the displacement of the mirror 123 by the horizontal component of the reaction force of the measurement force in this manner, the probe 1 of the present embodiment can measure the shape of the vertical surface of the measurement object 60 with a high accuracy.

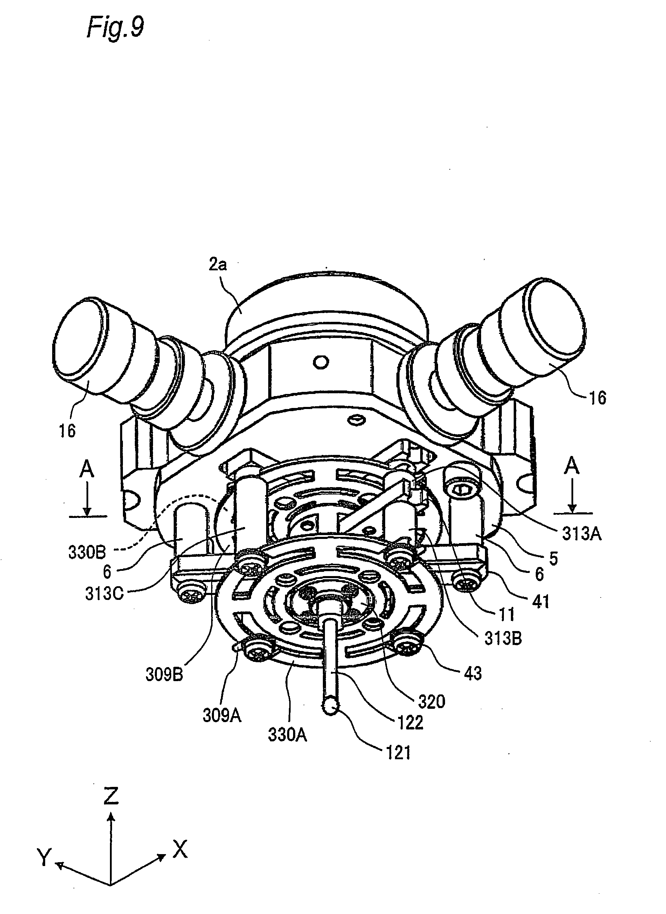

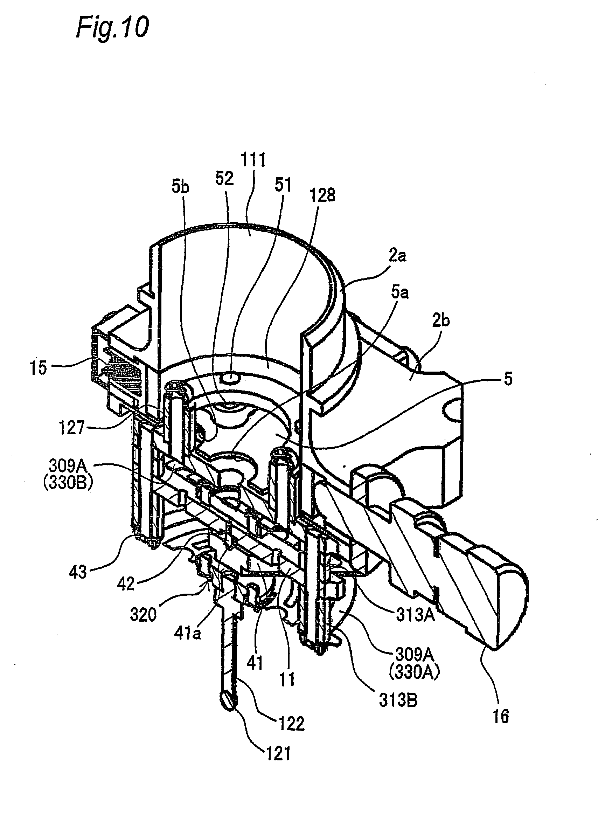

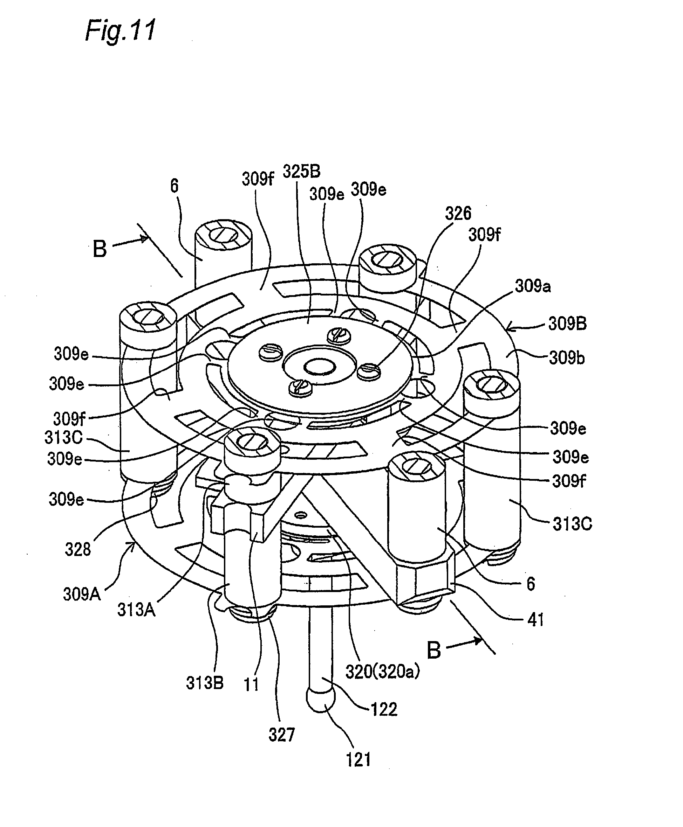

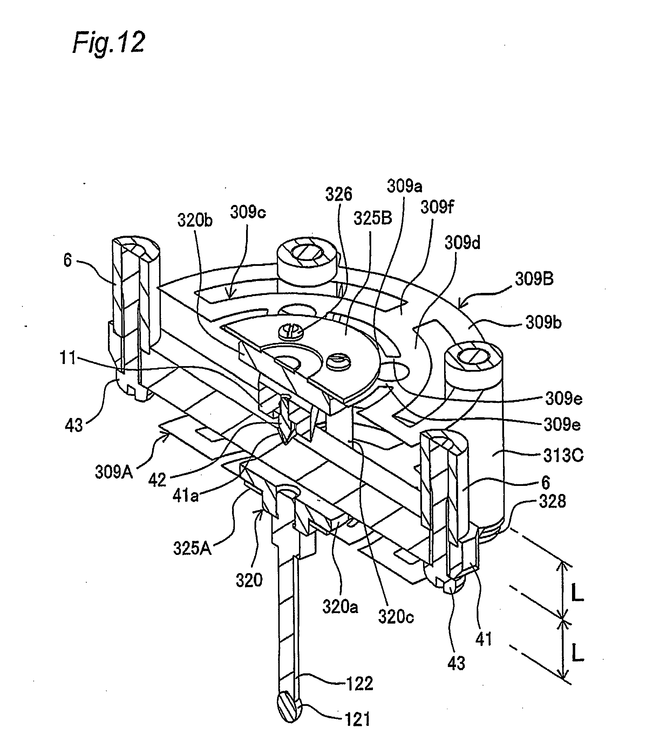

Figs 9 to 12 show an alternative of probe 1. Fig.9 is a perspective view showing an external appearance of the alternative probe 1 and Fig. 10 is a lateral sectional view thereof. Fig. 11 shows a lower portion (below the surface A-A of Fig. 9) of the alternative probe 1. Fig. 12 shows a section along a surface B-B in Fig. 11. Structures of the alternative probe not shown in Figs. 9 to 12 are same those of the probe 1 shown in Figs. 1 to 7. In Figs. 9 to 12, same elements are designated by same reference numerals in Figs. 1 to 7. In Figs 10 and 11, illustration of the viscoelastic bodies 330A, 330B is omitted.

Each of two plate springs 309A, 309B is a thick circular-disk like member formed with a plurality of punched out portions. Specifically, each of the plate springs 309A, 309B has a central portion 309 having generally circular plate like shape, an outer portion 309b having a circular ring like shape and surrounding the central portion 309a with an interval, and a connecting portion 309c which connects the central portion 309a and the outer portion 309b. The connecting portion 309c shown in Figs. 9 to 12 is provided with a circular ring belt portion 309d arranged between the central portion 309a and the outer portion 309b, bridging portions 309e respectively connecting the circular ring belt portion 309d, and the central portion 309a, and bridging portion 309f respectively connecting the circular ring belt portion 309d and the outer portion 309b. Pairs of bridging portions 309e are arranged at 90 degree intervals shown in the vertical direction. Pairs of bridging portions 309f are also arranged at 90 degree intervals shown in vertical direction. Therefore, the connecting section 309c of Figs. 9 to 12 generally has a configuration where a cross like shape is combined with a circular shape in a plain view. However, the specific configuration of the connecting section 309c is not limited to that shown in Figs. 9 to 12 and can be a configuration where the central portion 309a and the outer portion 309b are connected by a plurality of non-linear portions so that the length of the path between the central portion 309a an the outer portion 309b are elongated.

An arm attachment portion 320 of the probe 1 shown in Figs. 9 to 12 has a lower plate portion 320a, an upper plate portion 320b arranged above the lower plate portion 320a with an interval, and a pair of vertical rods 320c connecting ends of lower and upper plate portions 320a, 320b. The lower plate portion 320a, upper plate portion 320b, and vertical rods 320c respectively correspond to the lower beam portion 120a, upper beam portion 120b, and vertical beam portions 120c of the arm attachment portion 120 of the probe 1 shown in Figs. 1 to 7. The are 122 having, at the lower end thereof, the stylus 121 is attached to a lower surface of the lower plate portion 120a so as to extend downwardly. The stylus 121, the pointed end of the fulcrum member 42, and the mirror 123 is arranged on the same axis (the axis line of the stylus 121).

The probe 1 of Figs. 9 to 12 is similar to that of Figs. 1 to 7 in that plate sprigs 309A, 309B arranged in parallel are interposed between the arm attachment portion 320 and the swinging portion 303. However, the probe of Figs. 9 to 12 differs from that of Figs. 1 to 7 in arrangement of the vertical direction of two plate springs with respect to the fulcrum member 42 of the swinging portion 303. Specifically, both of two plate springs 9A, 9B of the probe 1 shown in Figs. 1 to 7 are arranged above the fulcrum member 42 of the swinging portion 303. Contrarily to this, in the probe 1 of Figs. 9 to 12, one plate spring 309A is arranged below the fulcrum member 42, whereas the other plate spring 309B is arranged above the fulcrum member 42.

Fixed to an upper surface of the upper plate portion 320b of the arm attachment portion 320 is the central portion 309a of the plate spring 309B. On the other hand, fixed to a lower surface of the lower plate portion 320a of the arm attachment portion 320 is the central portion of 309a of the plate spring 309A. In this example, the plate springs 309A, 309B are fixed to the arm attachment portion 320 by spring holders 325A, 325B fixed to the arm attachment portion 320 by screws 326. However, the manner where the plate springs 309A, 309B are fixed to the arm attachment portion 320 is not limited as far as necessary fixation strength is assured. The upper plate spring 309B is fixed to the lower member 11 of the swinging portion 303 and the lower plate spring 309A is fixed to the upper plate spring 309B. Specifically, at two positions respectively opposed with respect to the arm 122 shown in the vertical direction, spacers 313A having short cylinder shape are interposed between a lower surface of the outer portion 309b of the upper plate spring 309B and an upper surface of the lower member 11, and spacers 313B having long cylinder shape are interposed between a lower surface of the lower member 11 and an upper surface of the lower plate spring 309A. The two plate springs 309A, 309B, lower member 11, and two spacers 313A, 313B are tightened together by a screw 327. Further, at other two positions respectively opposed with respect to the arm 122 shown in the vertical direction, spacers 313C are interposed between the lower surface of the upper plate spring 309B and the upper surface of the lower plate spring 309A. A length of the spacer 313C corresponds to sum of lengths of the spacers 313A, 313B and a thickness of the lower member 11. The two plate springs 309A, 309B and spacer 313C are tightened together by a screw 328.

The alternative probe 1 shown in Figs. 9 to 12 has following features. Firstly, the central portion 309a of the plate spring 309A is fixed to the lower plate portion 320a and the central portion 309a of the plate spring 309B is fixed to the upper plate portion 320b. Such installation structure of the plates springs 309A, 309B to the arm attachment portion 302 enhances the rigidity in horizontal direction as the whole of the probe 1, thereby enabling the measurement with more high accuracy. The non-linear shape of the connecting portion 309c of each of the plate springs 309A, 309B connecting the central portion 309a and the outer portion 309b allows to set the length of the path from the central portion 309a of plate springs 309A, 309B to the swinging portion 303 long, resulting in that the rigidity in vertical direction of the plate springs 309A, 309B can be set smaller. Further, the arrangement of the two plate springs 309A, 309B where the fulcrum member 42 is sandwiched in the vertical direction between them decreases the measurement error caused by detraction of the two plate springs due to the horizontal component of the reaction force of the measurement force. This feature will be described in detail later.

The alternative probe 1 shown in Figs. 9 to 12 has viscoelastic bodies 330A, 330B attached to the plate springs 309A, 309B (especially, refer to Fig. 9). The viscoelastic bodies 330A, 330B is made of such material having vibration damping characteristic as various kinds of rubber, sponge, or damping material. In this alternative, the viscoelastic bodies 330A, 330B have a plate like shape of similar configuration with the plate springs 309A, 309B and fixed to one side of the plate springs 309A, 309B by means of double-faced tape. Other manner for fixation such as adhesion can be adopted. Further, the viscoelastic bodies 330A, 330B formed by forting the plate springs 309A, 309B with adequate material. Referring to Fig. 9, the viscoelastic body 330A is arranged on the lower surface of the lower pate spring 309A so as to converse all area not interfering with other elements such as the screw 43. Contrarily, the viscoelastic body 330B is arranged on the upper surface of the upper plate spring 309B so as to cover all area not interfering with other elements. The small rigidity in the vertical direction of the plate springs 309A, 309B may cause vibration of the plate springs 309A, 309B due to transmission of vibration occurred in the measurement apparatus itself or characteristics of the surface of the object to be measured. The vibration of the plate springs 309A, 309B may cause unintended displacement of the stylus 121, resulting in decease in measurement accuracy. However, the viscoelastic bodies 330A, 330B fixed to the plate springs 309A, 309B rapidly absorb and damps the vibration occurred in the plate springs 309A, 309B, thereby preventing the unintended displacement of the stylus 121 due to the vibration to enhance the measurement accuracy. The position where the viscoelastic body is fixed is not limited to that shown in Fig. 9. The proper fixation position of the viscoelastic body corresponding to the vibration characteristics of the plate spring can achieve the absorb of the vibration.

Next, a shape measuring apparatus including the probe 1 of the present embodiment is described.

Generally, the shape-measuring apparatus brings the probe into contact with the measurement object 60, and moves the probe along the surfaces to be measured 61a, 61b while controlling the movement of the probe so as to make approximately constant the measurement force with which the stylus is pressed to the surfaces to be measured 61a, 61b, so that surface shapes of the surfaces to be measured 61a, 6 1 b are measured and calculated by using a laser length measuring machine and a reference plane mirror, based on a position relationship between the probe and a reference surface.

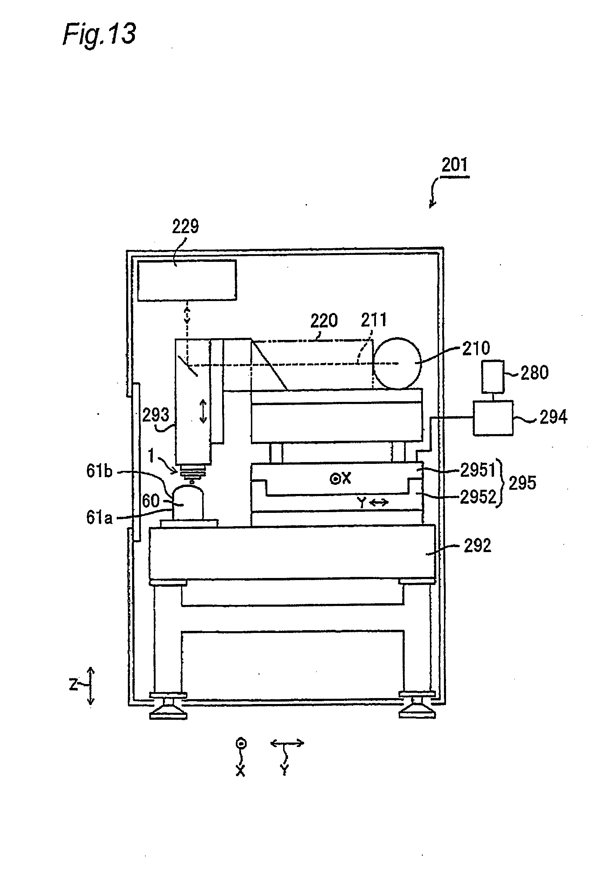

As one example of the above-described shape measuring apparatus, as shown in Fig. 13, there is a type in which the measurement object 60 is fixed onto a surface plate to move the probe in all the directions of the X axis, the Y axis, and the Z axis.

The shape measuring apparatus 201 shown in Fig. 13 includes a stage 295 having an X-stage 2951 and a Y-stage 2952 set up on a stone surface plate 292 movably in the X-axis and Y-axis directions. On this stage 295, a Z-table 293, a He-Ne laser (laser-light generating unit) 210, and a measurement-point information deciding unit 220 are placed. Thus, the stage 295 can move the Z-table 293, the He-Ne laser 210 and the measurement-point information deciding unit 220 in the X-axis and Y-axis directions.

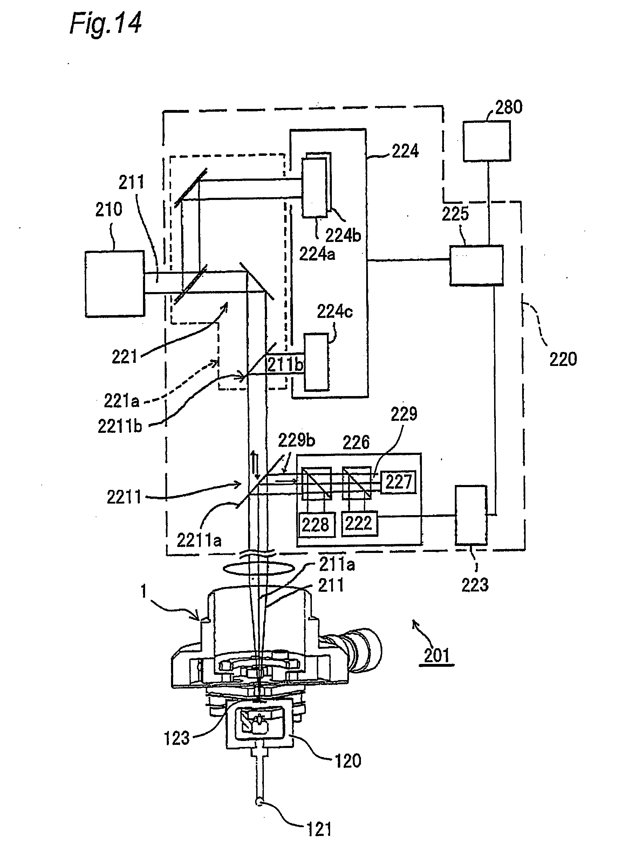

The measurement-point information deciding unit 220 is described in detail with reference to Figs. 13 and 14. As shown in Fig. 14, the measurement-point information deciding unit 220 has an optical system 221 to obtain position information of the surfaces to be measured 61a, 61b, a mirror-position and inclination detecting unit 226, a stylus-position calculating unit 223, and a position-coordinate measuring unit 224 and an addition unit 225. Among these, the mirror-position and inclination detecting unit 226 and a dichroic mirror 2211a constructing a part of the optical system 221 are attached to the movable side of the Z-table 293 together with the probe 1. These mirror-position and inclination detecting unit 226, the stylus-position calculating unit 223, the position-coordinate measuring unit 224, and the addition unit 225 are a part corresponding to the laser-length measuring machine described before, and components that are connected to the optical system 221 to actually find the position information.

The laser light for measurement 211 generated by the He-Ne laser 210 is split into four in the optically system 221 in order to find a three-dimensional coordinate position of the surfaces to be measured 61a, 61b of the measurement object 60 (see Fig. 1). A first optical system 221a has an X-axis reference plate with a reference surface made of a mirror surface perpendicular to the X-axis direction, and a Y-axis reference plate with a reference surface made of a mirror surface perpendicular to the Y-axis direction, whose illustrations are omitted, in order to detect movement amounts in the X-axis direction and in the Y-axis direction of the stage 295, that is, coordinate values in the X-axis direction and in the Y-axis direction of the surfaces to be measured 61a, 61b. Moreover, in the first optical system 221a, a Z reference plate 229 made of a mirror surface perpendicular to the Z-axis direction is also provided. The reference surfaces of the respective reference plates are each constructed with a flatness of 0.01 micron order.

As a shape measuring method of the surfaces to be measured 61a, 61b, for example, as described in Japanese Patent Application Laid-Open No. 10-170243, a publicly known laser-length measuring method is used, in which the respective reference surfaces of the X axis, the Y axis and the Z axis are irradiated with laser light, and an interference signal between the irradiated laser light and the reflected laser light at the respective reference surfaces is counted to thereby detect change in phase of the reflected laser light. More specifically, in this laser-length measuring method, for example, as disclosed in Japanese Patent Application Laid-Open No. H 4-1503, the laser light directed to each of the reference surfaces is split into reference light and measurement light by a splitting member such as a prism, and a phase between the reference light and the measurement light is shifted by 90 degrees. The measurement light is directed to the reference surface to be reflected, and interference light due to the phase shift between the returning reflected light and the reference light is electrically detected, and based on a Lissajous figure created from the obtained interference fringe signal, distances with respect to a reference point and the reference surface are measured.

The position-coordinate measuring unit 224 is a unit executing the above-described length measuring method, and has detecting units 224a to 224c that perform the length measurement of an X coordinate value, a Y coordinate value and a Z coordinate value of a measurement point in the surfaces to be measured 61a, 61b. In the present embodiment, as shown in Fig. 13, since the stage 295 is moved with respect to the measurement object 60 placed on the stone surface plate 292, the X coordinate value, the Y coordinate value, the Z coordinate value at the foregoing measurement point can be said to be absolute position coordinate values of the member for attachment 2 of the probe 1 attached to the Z-table 293.

In the present embodiment, the detecting unit 224c is a unit that performs the length measurement of the Z coordinate value of the stylus 121 of the probe 1, and functions as a stylus position measurement device. This point is described in detail below. As shown in Fig. 14, a part of the laser light for measurement 211 is directed through a focus lens 17 to a central point 123a of the mirror 123 attached to the arm attachment portion 120 included in the probe 1 for three-dimensional shape measuring apparatus attached to a lower end of the Z-table 293. The irradiated laser light 211 is reflected at the mirror 123, and reflected light 211b goes through the dichroic mirror 2211a included in a light separation portion 2211 without being reflected, and is reflected at a half mirror 2211b to be directed to the detecting unit 224c, so that the length measurement of the Z coordinate value of the stylus 121 can be performed.

A calculation result of the position-coordinate measuring unit 224 based on the detection results of the position detecting units 224a to 224c (in the present embodiment, the X-axis and Y-axis coordinate values of the member for attachment 2 and the Z-axis coordinate value of the stylus 121), and a calculation result of the stylus-position calculating unit 223 based on a detection result of the mirror-position and inclination detecting unit 226 are added in the addition unit 225 to thereby calculate the shape of the surface to be measured 61. The mirror-position and inclination detecting unit 226 detects the displacement of the stylus 121 (in the X-axis and Y-axis directions) accompanying the inclination of the swing portion 3 and the displacement of the stylus 121 (in the Z-axis direction) accompanying the displacement in the vertical direction of the arm attachment portion 120.

The mirror-position and inclination detecting unit 226 and the stylus-position calculating unit 223 are described below. The mirror-position and inclination detecting unit 226 includes a semiconductor laser 227 that irradiates the mirror 123, an inclination-angle detecting unit 222, and a vertical-position detecting unit 228. Laser light 229 of the semiconductor laser (laser light generating unit) 227 having a wavelength different from that of the He-Ne laser 210 is directed to the mirror 123 through the dichroic mirror 2211a. Reflected light 229b resulting from reflecting the laser light 229 at the mirror 123 is reflected at the dichroic mirror 2211a, and then enters the inclination-angle calculating unit 222 and the vertical-position detecting unit 228.

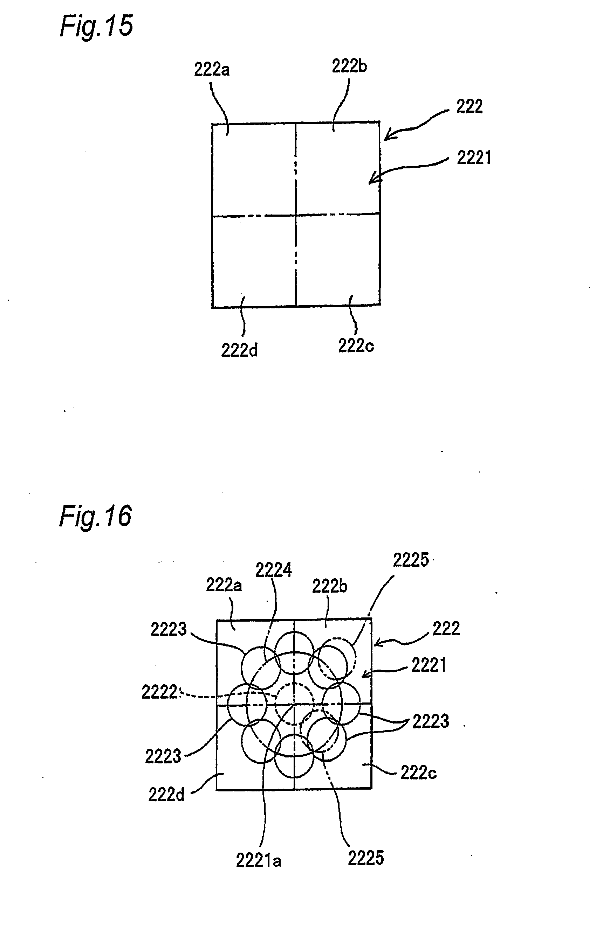

The inclination-angle detecting unit 222 is made of a light detector having an inclination-detecting light-receiving surface 2221 that receives the reflected light 229b and converts the same to an electric signal, and the inclination-detecting light-receiving surface 2221 is zoned into a plurality of light-receiving regions, which perform photoelectric conversion independently from one another. In the present embodiment, as shown in Fig. 15, the inclination-detecting light-receiving surface 2221 is zoned into four light-receiving regions 222a to 222d in a lattice shape, that is, in a cross shape. A number and a shape of the light-receiving regions are not limited to the illustrated form, but can be appropriately set, based on a relationship with measurement accuracy and the like.

During non-measurement time, the arm 122 of the probe 1 is arranged along the vertical direction. During non-measurement time, thus, the reflected light 229b travels along the vertical direction in parallel to an optical axis of the laser light 229 of the semiconductor laser light 227 directed to the mirror 123, and is reflected at the dichroic mirror 2211a to be directed to a central portion of the inclination-detecting light-receiving surface 2221 of the inclination-angle detecting unit 222. An irradiation region of the reflected light 226b in the inclination-detecting light-receiving surface 2221 in this case is an irradiation region during non-measurement time 2222, which is indicated by a dotted line in Fig. 16.

On the other hand, as stated in the description of the probe 1, since the measurement of the surface to be measured 61a, which is a vertical surface, is performed by pressing the stylus 121 to the surface to be measured 61a with an approximately constant measurement force, the swinging portion 3 of the probe 1 for three-dimensional shape measuring apparatus is inclined with respect to the member for attachment 2 as described above. When the swinging portion 3 is inclined, the reflected light 229b intersects the optical axis of the laser light 229 to travel to the mirror 2211a, and is directed to a reference irradiation region 2223 deviated from the central portion on the inclination-detecting light-receiving surface 2221 of the inclination-angle detecting unit 222. Moreover, as described above, during the measurement, the swinging portion 3 can swing in any direction without being limited to a specific direction with the pointed end of the fulcrum member 42 as the fulcrum point. Thus, if no fine irregularity of, for example, nano order which is to be measured exists in the surface to be measured 61a, the reference irradiation region 2223 is located along a circumference 2224 of a circle with a predetermined radius with a central point 2221a of the inclination-detecting light-receiving surface 2221 as a center, as shown in Fig. 16.

The inclination-angle detecting unit 222 generates an electric signal in accordance with the irradiation of the reflected light 229b to the inclination-detecting light-receiving surface 2221, and since the inclination-detecting light-receiving surface 2221 is zoned into the four light-receiving regions 222a to 222d, an inclination angle of the swinging portion 3 can be detected from the irradiation spot of the reflected light 229b. That is, if the light-receiving region 222a is "A", the light-receiving region 222b is "B", the light-receiving region 222c is "C", and the light-receiving region 222d is "D", the inclination angle of the swinging portion 3 in the X-axis direction can be found by calculating (A+B)-(C+D) with respect to the electric signals obtained from the respective light-receiving regions 222a to 222d, and the inclination angle of the swinging portion 3 in the Y-axis direction can be found by calculating (A+D)-(B+C). In this manner, the inclination-angle detecting unit 222 calculates (A+B)-(C+D) and (A+D)-(B+C) with respect to the electric signals obtained from the respective light-receiving regions 222a to 222d, and sends these to the stylus-position calculating unit 223 as an angle signal.

The stylus-position operation unit 223 converts the angle signal to a displacement amount of the stylus 121 included in the probe 1 for three-dimensional shape measuring apparatus.

On the other hand, since in fact, the fine irregularity exists in the surface to be measured 61a, the reflected light 229b is directed to a position deviated from the circumference 2224 corresponding to the fine irregularity, as shown as a displacement irradiation region 2225 in Fig. 16. As with the above-described reference irradiation region 2223, the inclination-angle detecting unit 222 sends the angle signal in accordance with the irradiation of the reflected light 226b to the displacement irradiation region 2225, and the stylus-position calculating unit 223 finds the displacement amount corresponding to the fine irregularity in the stylus 121. Accordingly, a magnitude of the fine irregularity can be found by finding a difference between a reference displacement amount of the stylus 121 corresponding to the reference irradiation region 2223 and the irregularity displacement amount corresponding to the displacement irradiation region 2225.

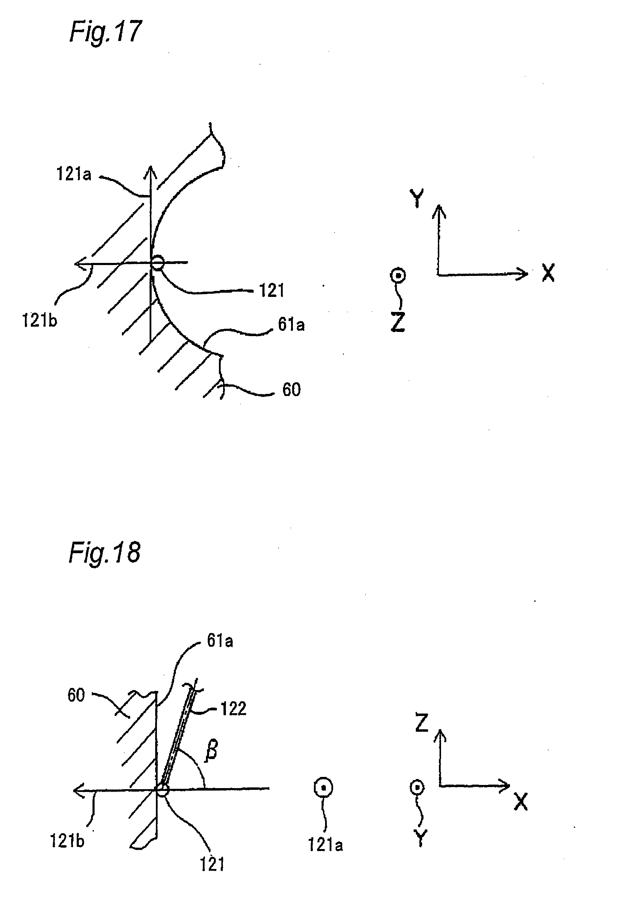

As a premise of this measurement method, in the configuration in which the swinging portion 3 can be inclined in any direction by oscillation with the pointed end of the fulcrum member 42 as the fulcrum point, the reference displacement amount needs to be constant or approximately constant. That is, since the swinging portion 3 swings in any direction, the irradiation region of the reflected light 229b on the inclination-detecting light-receiving surface 2221 moves, for example, along the circumference 2224 during the measurement. In this situation, the reflected light 229b is basically always directed to the reference irradiation region 2223. That is, whichever direction the swinging portion 3 swings, an inclination angle α of the swinging portion 3 needs to be constant or approximately constant. Accordingly, during the measurement, by controlling a driving unit 294 of the stage 295 in a control device 280, a movement amount and a movement direction of the stage 295 need to be controlled so that an inclination β of the swinging portion 3 with respect to a direction 121b perpendicular to a scanning direction 121a of the stylus 121 is constant as shown in Figs. 17 and 18 to correct the scanning direction 121a.

As described above, the magnitude of the fine irregularity at the measurement point of the surface to be measured 61a is found in the stylus-position calculating unit 223, and at the same time, as described above, the X coordinate value, the Y coordinate value and the Z coordinate value at the measurement point of the surface to be measured 61a are found in the position-coordinate measuring unit 224. The addition unit 225, thus, adds the X coordinate value, the Y coordinate value and the Z coordinate value at the measurement point of the surface to be measured 61a found in the position-coordinate measuring unit 224, and the displacement of the stylus 121 found in the stylus-position calculating unit 223 to find a measured X coordinate value, a measured Y coordinate value, and a measured Z coordinate value at the measurement point on the surface to be measured 61a. That is, if the X coordinate value, the Y coordinate value and the Z coordinate value at the measurement point of the surface to be measured 61a found in the position-coordinate measuring unit 224 are X1, Y1, Z1, respectively, and the X coordinate value of the displacement of the stylus 121 at the measurement point found in the stylus-position calculating unit 223 is (A+B)-(C+D), and the Y coordinate value is (A+D)-(B+C), the measured X coordinate value, the measured Y coordinate value and the measured Z coordinate value found in the addition unit 225 are X1+{(A+B)-(C+D)}, Y1+{(A+D)-(B+C)}, Z1, respectively.

Since the stylus 121 is spherical as illustrated, the measured X coordinate value, the measured Y coordinate value and the measured Z coordinate value are center coordinate values of the stylus 121. Accordingly, true coordinate values at the measurement point of the surface to be measured 61a are values shifted by the radius value of the stylus 121 in the direction perpendicular to the scanning direction of the probe 1.

The vertical-position detecting unit 228 included by the mirror-position and inclination detecting unit 226 detects vertical displacement of the mirror 123 with respect to the member for attachment 2 from the reflected light 229b from the mirror 123. The detection method may include a publicly known technique such as a method using a hologram as described in Japanese Patent Application Laid-Open No. 2008-292236.

Operation in the shape measuring apparatus 201 configured as described above, that is, a shape measuring method for the surfaces to be measured 61a, 61b of the measurement object 60 is described below. This shape measurement method is executed in the operation control of the control device 280.

First, a description of the case where the surface to be measured 61a, which is a vertical surface, is measured is given. As described above, the stage 295 having the Z-table 293 with the probe 1 for three-dimensional shape measuring apparatus attached is arranged relatively to the measurement object 60 such that the stylus 121 is brought into contact with the surface to be measured 61a, and further the stylus 121 presses the surface to be measured 61a with a measurement force of about 0.3 mN (=30 mgf), for example. In this state, the reflected light 226b is directed to the reference irradiation region 2223 on the inclination-detecting light-receiving surface 2221 of the mirror-position and inclination detecting unit 226, and as described above, the X coordinate value, the Y coordinate value and the Z coordinate value, which are a reference at the measurement point of the surface to be measured 61a are found by the addition unit 225 through the stylus-position calculating unit 223 and the position-coordinate measuring unit 224.

For example, taking for an example a case where the measurement object 60 is cylindrical, and an outer circumferential surface is totally measured, as described above, the driving unit 294 of the stage 295 is controlled in the control device 280 so that the inclination β of the swinging portion 3 with respect to the perpendicular direction 121b shown in Figs. 17 and 18 is maintained constant or approximately constant, that is, the swinging portion 3 is inclined in any direction and the inclination α of the swinging portion 3 with respect to the vertical direction is maintained constant or approximately constant, by which the movement amounts and the movement directions of the stage 295 in the X-axis direction and the Y-axis direction are controlled. In the present embodiment, by the adjustment to an angle that allows the displacement of the terminal end of the stylus 121 to be kept at 10 µm, the measurement force can be kept at 0.3 mN.

In this manner, the swinging portion 3 performs the so-called oscillating motion or precessional motion around the entire circumference of the surface to be measured 61a to measure the surface to be measured 61a. This allows the reflected light 226b to make a round of the respective light-receiving regions 222a to 222d on the inclination-detecting light-receiving surface 2221 of the inclination-angle detecting unit 222, for example, along the circumference 2224. At this time, the irradiation region of the reflected light 226b moves from the reference irradiation region 2223 to the displacement irradiation region 2225 corresponding to the irregularity of the surface to be measured 61a.

Based on the above-described measurement operation, as described above, the measured X coordinate value, the measured Y coordinate value and the measured Z coordinate value at the measurement point of the surface to be measured 61a including the irregularity are found by the addition unit 225 through the stylus-position calculating unit 223 and the position-coordinate measuring unit 224.

Next, a description of the case where the surface to be measured 61 b, which is a horizontal surface, is measured is given. In this case, the measurement force with which the stylus 121 is pressed to the surface to be measured 61b needs to be generated vertically downward. Moreover, for high-accuracy measurement, the vertically downward measurement force needs to be constant. The stage 295 is moved in the horizontal direction by controlling the driving unit 294 in the control device 280, and the Z-table 293 is operated so that based on the detection result of the vertical-position detecting unit 228 of the mirror-position and inclination detecting unit 226, the displacement amount in the vertical direction of the mirror 123 is constant. For example, the control is performed so that when the bending of the plate springs 9A, 9B during non-measurement time is 100 µm, the bending becomes 90 µm during the measurement, which allows the measurement force to be kept at 5 mN. Moreover, since the stylus 121 is moved up and down, following the minute displacement of the surface to be measured 61b, by the detection value of the detecting unit 224c functioning as a length measuring unit of the Z coordinate of the mirror 123 moving integrally with the stylus 121, the minute displacement of the measurement object can be measured.

Moreover, when the inclination from the complete horizontal surface becomes larger, during the measurement of the inclination at about 45 degrees, for example, generating the vertically downward pressing force causes the inclination in the arm 122 of the stylus 121. Since the inclination of the arm is detected in the inclination-angle detecting unit 222, the inclination amount is converted to the stylus displacement and correction is applied, which enables the high-accuracy measurement.

However, when the measurement is performed by the above-described method, distortion and displacement in the horizontal direction of the elastic portion (in the present embodiment, the plate springs 9A, 9B) interposed between the arm attachment portion 120 and the swinging portion 3 cannot be detected, thereby causing a measurement error. If the rigidity in the horizontal direction of the elastic portion is small, the distortion and the displacement in the horizontal direction of the elastic portion are easily caused. As shown in Fig. 19, an elastic portion 9 can be made of one plate spring 9. In this configuration, however, the distortion is easily caused in the plate spring 9 by the horizontal component of the reaction force of the measurement force acting on the stylus 121, and this distortion causes the displacement in the horizontal direction of the arm attachment portion 120 and decentering of the swinging. In contract, in the present embodiment, since the elastic portion is made of the two plate springs 9A, 9B, the rigidity in the horizontal direction is sufficiently larger than the rigidity in the vertical direction, so that the distortion and the displacement in the horizontal direction of the elastic portion are reduced. In other words, as shown conceptually in Fig. 20, the arm attachment portion 120 is configured to be displaced only in the vertical direction as much as possible without being displaced in the horizontal direction. In a configuration in which three or more plate springs are arranged at a distance from one another in the vertical direction, the rigidity in the horizontal direction can further increase, thereby reducing the distortion and the displacement in the horizontal direction of the elastic portion. While as described with reference to Fig. 8, the plates springs 9A, 9B may be rectangular, in this case, the rigidity in a short side direction of the rectangle is small, and thus, the configuration in which as with the plate springs 9A, 9B of the present embodiment, the plurality of beam-like portions 9b extend radially from the central portion 9a (cross shape) is more preferable.

The non-linear connecting portion 309c as the previous described alternative shown in Figs. 9 to 12 can achieve short length of the path from the central portion 309a to the outer portion 309b of the plate springs 309A, 309B. This can achieve decrease in measurement force by decreasing the rigidity in the vertical direction with keeping enough rigidity in the horizontal direction. Although the small rigidity of the plate spring may cause vibration due to the transmission of vibration occurred in the measurement apparatus itself or the characteristics of the surface of the object to be measured, the viscoelastic body attached to the adequate position corresponding to the vibration characteristic of the plate spring has the effect of absorbing the vibration.

When a minute deformation in the horizontal direction of the two plate springs is occurred due to the horizontal component of the reaction force of the measurement force applied to the stylus during the measurement of the vertical surface, a center of rotation of the stylus 121 due to the deformation of the two plate springs is changed corresponding to a length of the arm 122. However, the arrangement of the two plate springs 309A, 309B where the fulcrum member 42 is sandwiched in the vertical direction between them can decrease the measurement error due to the deformation of the two plate springs 309A, 309B caused by the horizontal element of the reaction fore of the measurement force. Especially, the two plate springs 309A, 309B approximately evenly arranged in the vertical direction with respect to the pointed end of the fulcrum member 42 as shown in a reference sign L in Fig. 10 can effectively decrease the measurement error due to the deformation of the two plate springs 309A, 309B caused by the horizontal element of the reaction fore of the measurement force applied to the stylus 121.

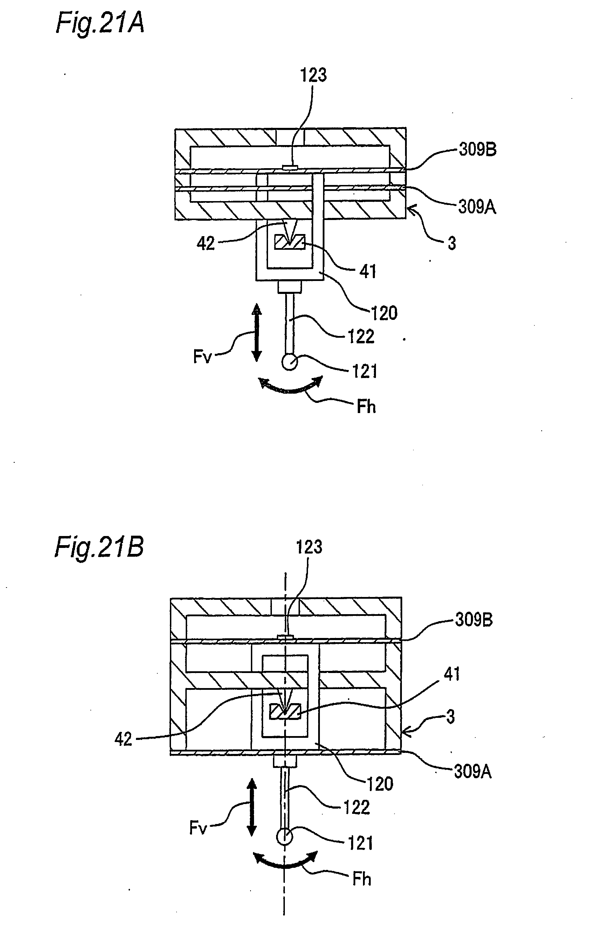

In both cases where both of the two plate springs 309A, 309B are arranged above the fulcrum member 42 with the narrow interval therebetween (in the case of Figs. 1 to 8) and where one of the two plate springs 309A, 309B is arranged above the fulcrum member 42 with the wide interval therebetween (in the case of Figs. 9 to 12), the two plate springs 309A, 309B exert larger resistance force against the horizontal element of the reaction force of the measurement force (horizontal force Fh) than against the vertical element of the reaction force of the measurement force (vertical force Fv). However, the narrow interval between the plate springs 309A, 309B as shown in Fig. 21A does not exert the resistance force enough larger against the horizontal force Fh than against the vertical force Fv and has a tendency to cause torsion of the plate springs 309A, 309B due to the horizontal force Fh. Contrarily to this, the wide interval between the plate springs 309A, 309B as shown in Fig. 21B exerts the resistance force enough larger against the horizontal force Fh than against the vertical force Fv and has less tendency to cause torsion of the plate springs 309A, 309B. Further, in the case of Fig. 21B, because the center of rotation of the stylus 121 due to the deflection of the two plate springs 309A, 309B by the horizontal force Fh is positioned near the pointed end of the fulcrum member 42, the deflection of the pate springs 309A, 309B has merely small effect on the measurement accuracy. For the above-discussed reasons, the two plate springs 309A, 309B arranged so that the fulcrum member 42 is sandwiched in the vertical direction therebetween can more effectively decrease the measurement error.

As described above, according to the probe 1 for three-dimensional shape measuring apparatus having the above configuration, since the swinging portion 3 inclinable in an arbitrary horizontal direction is held in the non-contact state and in the neutral position using the magnetic force by the magnets, and the force with which the stylus 121 presses the measurement object 60, that is, the measurement force is minutely generated, damage due to contingent impact is hardly caused. Because of the structure in which the conical grove 41a and the fulcrum member 42 made of the pointed end in the coupling mechanism 4 are pressed by the attraction force of the movable-side magnets 51 and the fixed-side magnets 52, position deviation of the fulcrum point is reduced. This enables the probe 1 to be used in the state where the axis of the stylus 121 is inclined instead of being limited to the vertical direction. Moreover, since unlike electromagnets, no current is caused to flow, the configuration is simple and no effect by electric heat is suffered.

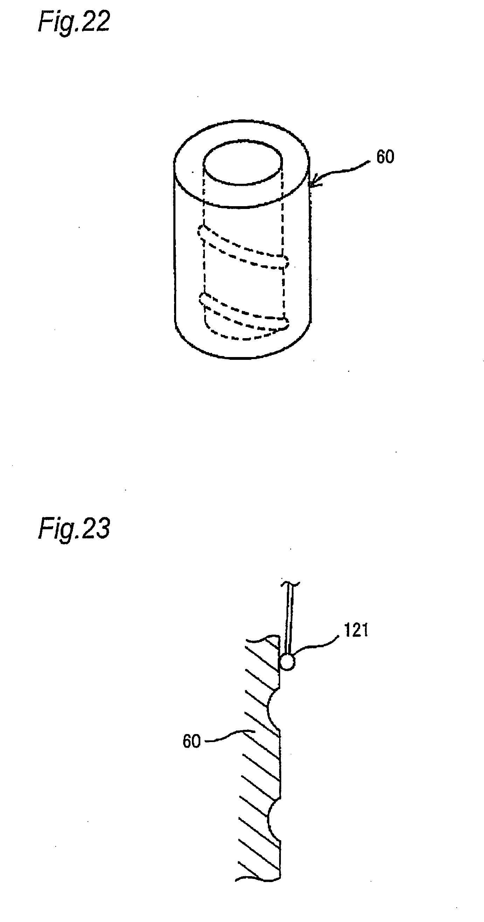

Moreover, according to the shape measuring apparatus 201 according to the present embodiment, in the probe 1 for three-dimensional shape measuring apparatus, the swinging portion 3 having the stylus 121 can perform the so-called oscillating motion or precessional motion. Accordingly, for example, when the measurement of an inner circumferential surface of the measurement object 60 is performed, by moving the probe 1 in the X-axis direction and in the Y-axis direction without rotating the measurement object 60, the measurement of the inner circumferential surface is enabled. Thus, the shape measurement is enabled regardless of the inclination direction of a side surface of the measurement object 60 without employing a complicated configuration in the measuring apparatus. Moreover, since the measurement object 60 need not be rotated, a problem that runout of a central axis of the measurement object 60 occurs is not caused, and the reduction in measurement error of the surface to be measured can be achieved. Thus, for example, an outer diameter of a lens, a hole diameter or the like can be measured, and also a shape of a groove portion 55 to contain lubricant, which is formed in the measurement object 60 such as a fluid dynamic bearing as shown in Figs. 22 and 23, for example, can be measured. Furthermore, since the measurement of the horizontal surface is enabled, squareness with respect to a horizontal surface of a hole can be measured with a high accuracy. Thus, the shape measuring apparatus 201 can widely contribute to development of industry which has headed for higher accuracy and miniaturization.

The present invention is not limited to the foregoing embodiment, but can be carried out in various aspects. Hereinafter, other aspects are exemplified.

The configuration of the swinging portion 3 is not limited to the above-described configuration as long as the placement table 41 is arranged swingably by the fulcrum point. For example, while in the above-described embodiment, the fulcrum member is a member provided in a projected shape, and is constructed such that the terminal end of the projection is fitted into the conical groove, a member projected upward may be proved in the placement table, and a conical groove provided in the swinging member may serve as a supporting member.

While in the above-described embodiment, the attraction force by the movable-side magnets 51 and the fixed-side magnets 52 is used, when on any one of the fixed side and the movable side, magnetic bodies are used in place of the magnets, the same effect can be obtained.

While in the above-described embodiment, the end portions of the plate springs 9A, 9B (terminal ends of the beam-like portions 9b) are fixed to the swinging portion 3, and the arm attachment portion 120 is fixed to the central portion 9a, on the contrary, the arm attachment portion 120 may be fixed to the end portions of the plate springs, and the central portion may be fixed to the swinging portion 3.

In the above-described embodiment, for inclination detection of the arm 122, a non-contact displacement sensor may be provided. As a type of the sensor, a capacitance type sensor can be considered. This allows the inclination in the two directions of X and Y with the fulcrum point of the swinging portion 3 as the center to be detected.

While in the shape measuring apparatus 201 of the above-described embodiment, the measurement object 60 is fixed onto the stone surface plate 292 and the probe 1 for three-dimensional shape measuring apparatus is moved in the X, Y, and Z-axis directions, on the contrary, the probe 1 for three-dimensional shape measuring apparatus may be fixed and the measurement object 60 may be moved. In short, the measurement object 60 and the probe 1 only need to be relatively moved.

According to the present invention, the measurement with a small pressing force is enabled not only during the measurement of a vertical surface but also during the measurement of a horizontal surface, and reduction in the displacement of the horizontal direction of the mirror inside the probe enables the shape of the measurement object to be measured with a high accuracy. The present invention can be applied to a probe for shape measurement of a shape measuring apparatus that scans and measures with a high accuracy and a low measurement force in the measurement of an inner surface of a hole in an arbitrary shape and a hole diameter, and further not only in the shape measurement of a vertical surface of an outer surface in an arbitrary shape, but also in the shape measurement of a horizontal surface thereof.

## Claims

1. A probe (1) for three-dimensional shape measuring apparatus (201) comprising:
an attachment portion (2) for attachment to a three-dimensional shape measuring apparatus (201);
an arm support portion (120) from which an arm (122) with a stylus (121) for contacting with a surface (61 a, 61 b) to be measured of a measurement object (61) at a lower end thereof extends downwardly and to which a mirror (123) is attached;
an elastic portion (9, 9A, 9B, 309A, 309B) to which the arm support portion (120) is attached, which minutely moves the arm support portion (120) in a vertical direction by elastic deformation, and which has a larger rigidity in a horizontal direction than that in a vertical direction;
a swinging portion (3) which holds the elastic portion (9, 9A, 9B, 309A, 309B) and coupled to the attachment portion through a coupling mechanism (4), the coupling mechanism (4) including a fulcrum portion (42) provided in the swinging portion (3) and a cradle portion (41, 41a) provided in the attachment portion (2) and receiving the fulcrum portion (42) thereon, and the coupling mechanism (4) coupling the swinging portion (3) to the attachment portion (2) swingably with the fulcrum portion (42) as a fulcrum point; and
a biasing mechanism which includes a movable-side member (51) provided in the swinging portion (3) and a fixed-side member (52) provided in the attachment portion (2) so as to be opposed to the movable-side member (51) at a distance in the vertical direction, the movable-side and fixed-side members (51, 52) generating a magnetic attraction force which biases the swinging portion (3) so as to direct the arm (122) in the vertical direction.

2. The probe (1) according to claim 1, wherein
the elastic portion (9) is provided with a single plate spring (9).

3. The probe (1) according to claim 1, wherein
the elastic portion (9A, 9B) is provided with two or more plate springs (9A, 9B) arranged at a distance from one another in the vertical direction.

4. The probe (1) according to claim 3, wherein
the stylus (121), the fulcrum portion (42), and the mirror (123) are arranged on a same axis,
wherein the mirror (123) is positioned above the stylus (121) and the fulcrum portion (42), and
wherein the elastic portion (9A, 9B, 309A, 309B) consists two spring plates (9A, 9B, 309A, 309B), one of the spring plates (9B) being positioned above a position where the fulcrum portion (42) is received on the cradle portion (41, 41 a) and the other of the spring plates (9B) being positioned below the position.

5. The probe (1) according to any one of claims 2 to 4, wherein
the plate spring (9, 9A, 9B) includes a central portion (9a) to which the arm support portion (120) is attached, and a plurality of beam-like portions (9b) extending radially from the central portion (9a) and having terminal ends fixed to the swing portion (3).

6. The probe (1) according to claim 2 to 4, wherein
the plate spring (309A, 309B) includes a central portion (309a) to which the arm support portion (120) is attached, a peripheral portion (309b) which is fixed to the swinging portion (3), and a plurality of connecting portions (309c, 309d, 309e, 309f) having non-linear configuration and respectively connecting the central portion and the peripheral portion (309b).

7. The probe (1) according to any one of claims 2 to 4
further comprising a viscoelastic body (330A, 330B) attached to the plate spring (309A, 309B) and having a configuration corresponding to vibration property of the plate spring (309A, 309B).

8. A three-dimensional shape measuring apparatus (201) comprising:
the probe (1) for three-dimensional shape measuring apparatus according to any one of claims 1 to 7;
a laser light generating unit (210) which generates the laser light for measurement; and
a measurement-point information deciding unit (220) which detects position information of a measurement point in a surface (61a, 61b) to be measured of the measurement object (61), based on reflected light resulting from reflecting the laser light for measurement at the mirror (123).

9. The three-dimensional shape measuring apparatus (201) according to claim 8, wherein
the measurement-point information deciding unit (220) comprises:
an inclination-angle detecting unit (222) which detects an inclination angle of the swinging portion (3) from the reflected light;
a stylus-position calculating unit (223) which converts an angle signal obtained from the inclination-angle detecting unit (226) to a displacement amount of the stylus (121) with respect to the attachment portion (2);
a position-coordinate measuring unit (224) which finds position coordinate values of the measurement point with respect to the attachment portion (2) from the reflected light; and
an addition unit (225) which adds the displacement amount of the stylus (121) to the position coordinate values to find the position information of the measurement point.

10. The three-dimensional shape measuring apparatus (201) according to claim 9, wherein
the inclination-angle detecting unit (222) has a light detector which receives the reflected light, and the light detector has one light-receiving surface zoned into a plurality of light-receiving regions (222a-d) which perform photoelectric conversion independently from one another.

## Patentansprüche

1. Sonde (1) für eine dreidimensionale Formmessvorrichtung (201), mit:
einem Anbringungsabschnitt (2) zur Anbringung an einer dreidimensionalen Formmessvorrichtung (201),
einem Armtrageabschnitt (120), von dem sich ein Arm (122) mit einem Fühler (121) zum Kontaktieren mit einer zu messenden Oberfläche (61 a, 61 b) eines Messobjekts (61) an dessen unterem Ende abwärts erstreckt und an dem ein Spiegel (123) angebracht ist,
einem elastischen Abschnitt (9, 9A, 9B, 309A, 309B), an dem der Armtrageabschnitt (120) angebracht ist, der durch elastische Verformung den Armtrageabschnitt (120) geringfügig in vertikaler Richtung bewegt und der eine größere Steifigkeit in horizontaler Richtung als in vertikaler Richtung aufweist,
einem Schwingabschnitt (3), der den elastischen Abschnitt (9, 9A, 9B, 309A, 309B) hält und mit dem Anbringabschnitt über einen Kopplungsmechanismus (4) gekoppelt ist, wobei der Kopplungsmechanismus (4) einen Stützpunktsabschnitt (42), der in dem Schwingabschnitt (3) vorgesehen ist, und einen Wiegenabschnitt (41, 41 a) aufweist, der in dem Anbringabschnitt (2) vorgesehen ist und den Stützpunktabschnitt (42) aufnimmt, und wobei der Kopplungsmechanismus (4) den Schwingabschnitt (3) in schwingfähiger Weise mit dem Anbringabschnitt (2) koppelt, wobei der Stützpunktabschnitt (42) als ein Stützpunkt wirkt, und
einem Vorspannungsmechanismus, der ein bewegungsseitiges Element (51), das in dem Schwingabschnitt (3) vorgesehen ist, und ein festseitiges Element (52) aufweist, das in dem Anbringabschnitt (52) vorgesehen ist, sodass es dem bewegungsseitigen Element (51) in einem Abstand in der vertikalen Richtung gegenüberliegt, wobei das bewegungsseitige und das festseitige Element (51, 52) eine magnetische Anziehungskraft erzeugen, die den Schwingabschnitt (3) vorspannt, um den Arm (122) in vertikaler Richtung zu richten.

2. Sonde (1) nach Anspruch 1, wobei
der elastische Abschnitt (9) mit einer einzelnen Tellerfeder (9) versehen ist.

3. Sonde (1) nach Anspruch 1, wobei
der elastische Abschnitt (9A, 9B) mit zwei oder mehreren Tellerfedern (9A, 9B) versehen ist, die voneinander in vertikaler Richtung beabstandet angeordnet sind.

4. Sonde (1) nach Anspruch 3, wobei
der Fühler (121), der Stützpunktabschnitt (42) und der Spiegel (123) auf einer gemeinsamen Achse angeordnet sind,
wobei der Spiegel (123) oberhalb des Fühlers (121) und des Stützpunktabschnitts (42) positioniert ist, und
wobei der elastische Abschnitt (9A, 9B, 309A, 309B) aus zwei Tellerfedern (9A, 9B, 309A, 309B) besteht, wobei eine der Tellerfedern (9B) oberhalb einer Position positioniert ist, an der der Stützpunktabschnitt (42) in dem Wiegenabschnitt (41, 41 a) aufgenommen ist, und die andere der Tellerfedern (9B) unterhalb der Position positioniert ist.

5. Sonde (1) nach einem der Ansprüche 2 bis 4, wobei
die Tellerfeder (9, 9A, 9B) einen Mittelabschnitt (9a), an dem der Armtrageabschnitt (120) angebracht ist, und mehrere balkenförmige Abschnitte (9b) aufweist, die sich radial von dem Mittelabschnitt (9a) erstrecken und deren äußere Enden an dem Schwingabschnitt (3) befestigt sind.

6. Sonde (1) nach Anspruch 2 bis 4, wobei
die Tellerfeder (309A, 309B) einen Mittelabschnitt (309a), an dem der Armtrageabschnitt (120) angebracht ist, einen Randabschnitt (309b), der an dem Schwingabschnitt (3) befestigt ist, und mehrere Verbindungsabschnitte (309c, 309d, 309e, 309f) mit nicht-linearer Konfiguration aufweist, die jeweils den Mittelabschnitt und den Randabschnitt (309b) verbinden.

7. Sonde (1) nach einem der Ansprüche 2 bis 4,
ferner mit einem viskoelastischen Körper (330A, 330B), der an der Tellerfeder (309A, 309B) angebracht ist und eine Konfiguration entsprechend einer Vibrationseigenschaft der Tellerfeder (309A, 309B) aufweist.

8. Dreidimensionale Formmessvorrichtung (201) mit:
der Sonde (1) für eine dreidimensionale Formmessvorrichtung nach einem der Ansprüche 1 bis 7,
einer Laserlichterzeugungseinheit (210), die das Laserlicht für eine Messung erzeugt, und
einer Messpunktinformationsentscheidungseinheit (220), die Positionsinformation eines Messpunkts in einer zu messenden Oberfläche (61 a, 61 b) des Messobjekts (61) auf Basis von reflektiertem Licht erfasst, das von einem Reflektieren des Laserlichts zur Messung an dem Spiegel (123) resultiert.

9. Dreidimensionale Formmessvorrichtung (201) nach Anspruch 8, wobei
die Messpunktinformationsentscheidungseinheit (220) umfasst:
eine Neigungswinkelerfassungseinheit (222), die einen Neigungswinkel des Schwingabschnitts (3) aus dem reflektierten Licht erfasst,
eine Fühlerpositionsberechnungseinheit (223), die ein Winkelsignal, das von der Neigungswinkelerfassungseinheit (226) erhalten wurde, in ein Versatzmaß des Fühlers (121) hinsichtlich des Anbringabschnitts (2) konvertiert,
eine Positionskoordinatenmesseinheit (224), die Positionskoordinatenwerte des Messpunkts hinsichtlich des Anbringabschnitts (2) aus dem reflektierten Licht findet, und
eine Addiereinheit (225), die das Versatzausmaß des Fühlers (121) zu den Positionskoordinatenwerten addiert, um die Positionsinformation des Messpunkts zu finden.

10. Dreidimensionale Formmessvorrichtung (201) nach Anspruch 9, wobei
die Neigungswinkelerfassungseinheit (222) einen Lichtdetektor aufweist, der das reflektierte Licht empfängt, wobei der Lichtdetektor eine Lichtempfangsoberfläche aufweist, die in mehrere Lichtempfangsbereiche (222a-d) unterteilt ist, die photoelektrische Konversion unabhängig voneinander durchführen.

## Revendications

1. Sonde (1) pour un appareil de mesure de forme tridimensionnelle (201), comprenant :
une partie de fixation (2) destinée à être fixée à un appareil de mesure de forme tridimensionnelle (201) ;
une partie de support de bras (120) à partir de laquelle un bras (122) ayant un stylet (121) destiné à venir en contact avec une surface (61a, 61b) devant être mesurée d'un objet de mesure (61) au niveau d'une extrémité inférieure de celui-ci s'étend vers le bas et à laquelle un miroir (123) est fixé ;
une partie élastique (9, 9A, 9B, 309A, 309B) à laquelle la partie de support de bras (120) est fixée, qui déplace minutieusement la partie de support de bras (120) dans une direction verticale par une déformation élastique, et qui présente une rigidité plus grande dans une direction horizontale que celle dans une direction verticale ;
une partie oscillante (3) qui maintient la partie élastique (9, 9A, 9B, 309A, 309B) et couplée à la partie de fixation par un mécanisme de couplage (4), le mécanisme de couplage (4) comportant une partie d'appui (42) prévue dans la partie oscillante (3) et une partie de berceau (41, 41a) prévue dans la partie de fixation (2) et recevant la partie d'appui (42) sur celle-ci, et le mécanisme de couplage (4) couplant la partie oscillante (3) à la partie de fixation (2) de manière oscillante avec la partie d'appui (42) en tant que point d'appui ; et
un mécanisme de sollicitation qui comporte un élément côté mobile (51) prévu dans la partie oscillante (3) et un élément côté fixe (52) prévu dans la partie de fixation (2) de manière à être opposé à l'élément côté mobile (51) à une distance dans la direction verticale, les éléments côté fixe et côté mobile (51, 52) générant une force d'attraction magnétique qui sollicite la partie oscillante (3) afin de diriger le bras (122) dans la direction verticale.

2. Sonde (1) selon la revendication 1, dans laquelle
la partie élastique (9) est munie d'un ressort à lames unique (9).

3. Sonde (1) selon la revendication 1, dans laquelle
la partie élastique (9A, 9B) est munie de deux ou de plusieurs ressorts à lames (9A, 9B) agencés à une distance les uns des autres dans la direction verticale.

4. Sonde (1) selon la revendication 3, dans laquelle
le stylet (121), la partie d'appui (42), et le miroir (123) sont agencés sur un même axe,
dans laquelle le miroir (123) est positionné au-dessus du stylet (121) et de la partie d'appui (42), et
dans laquelle la partie élastique (9A, 9B, 309A, 309B) est constituée de deux lames de ressort (9A, 9B, 309A, 309B), l'une des lames de ressort (9B) étant positionnée au-dessus d'une position où la partie d'appui (42) est reçue sur la partie de berceau (41, 41a) et l'autre des lames de ressort (9B) étant positionnée en dessous de la position,

5. Sonde (1) selon l'une quelconque des revendications 2 à 4, dans laquelle
le ressort à lames (9, 9A, 9B) comporte une partie centrale (9a) à laquelle la partie de support de bras (120) est fixée, et une pluralité de parties en forme de montant (9b) s'étendant radialement à partir de la partie centrale (9a) et ayant des extrémités terminales fixées à la partie oscillante (3).

6. Sonde (1) selon les revendications 2 à 4, dans laquelle
le ressort à lames (309A, 309B) comporte une partie centrale (309a) à laquelle la partie de support de bras (120) est fixée, une partie périphérique (309b) qui est fixée à la partie oscillante (3), et une pluralité de parties de liaison (309c, 309d, 309e, 309f) ayant une configuration non-linéaire et reliant respectivement la partie centrale et la partie périphérique (309b).

7. Sonde (1) selon l'une quelconque des revendications 2 à 4
comprenant en outre un corps viscoélastique (330A, 330B) fixé au ressort à lames (309A, 309B) et ayant une configuration correspondant à une propriété de vibration du ressort à lames (309A, 309B).

8. Appareil de mesure de forme tridimensionnelle (201), comprenant :
la sonde (1) pour un appareil de mesure de forme tridimensionnelle selon l'une quelconque des revendications 1 à 7 ;
une unité de génération de lumière laser (210) qui génère de la lumière laser pour la mesure ; et
une unité de décision d'informations de point de mesure (220) qui détecte des informations de position d'un point de mesure dans une surface (61a, 61b) devant être mesurée de l'objet de mesure (61), sur la base de la lumière réfléchie résultante de la réflexion de la lumière laser pour la mesure au niveau du miroir (123).

9. Appareil de mesure de forme tridimensionnelle (201) selon la revendication 8, dans lequel
l'unité de décision d'informations de point de mesure (220) comprend :
une unité de détection d'angle d'inclinaison (222) qui détecte un angle d'inclinaison de la partie oscillante (3) à partir de la lumière réfléchie ;
une unité de calcul de position de stylet (223) qui convertit un signal d'angle obtenu à partir de l'unité de détection d'angle d'inclinaison (226) en une quantité de déplacement du stylet (121) par rapport à la partie de fixation (2) ;
une unité de mesure de coordonnées de position (224) qui détermine des valeurs de coordonnées de position du point de mesure par rapport à la partie de fixation (2) à partir de la lumière réfléchie ; et
une unité d'addition (225) qui additionne la quantité de déplacement du stylet (121) aux valeurs de coordonnées de position pour déterminer les informations de position du point de mesure.

10. Appareil de mesure de forme tridimensionnelle (201) selon la revendication 9, dans lequel
l'unité de détection d'angle d'inclinaison (222) présente un détecteur de lumière qui reçoit la lumière réfléchie, et le détecteur de lumière présente une surface de réception de lumière située dans une pluralité de régions de réception de lumière (222a-d) qui effectuent une conversion photoélectrique indépendamment les unes des autres.
